# EUROPEAN PATENT APPLICATION

(11) **EP 4 794 275 A1**
(43) Date of publication of application: **19.08.2026**
(21) Application number: 25213752.6
(22) Date of filing: 05.11.2025
(51) Int. Cl.: H04L 12/40, H04L 12/46, H04L 67/2871

(54) **EDGE MODULE AND COMMUNICATION METHODS**

(30) Priority: 05.11.2024 US 202463716621 P
(71) Applicant: nVENT SERVICES GMBH, 8200 Schaffhausen (CH)
(72) Inventor: Southwell, David Thomas, Alberta (CA)
(74) Representative: Barker Brettell LLP

(57) **Abstract**

An edge module (300) and corresponding methods are provided. One method includes receiving, by the edge module connected to a device (19A, 19B), a Modbus packet from a management system (20). The packet comprises a block write command to a command buffer and a block read command to a response buffer, wherein the buffers are associated with contiguous sets of registers of the edge module. The edge module interprets the request based on command buffer data, determining associated registers of the device to perform an action. The edge module generates and sends a second Modbus packet comprising a command to the determined registers for the device to perform the action. The edge module writes data into the response buffer based on device performance, to be read by the management system.

## Description

### RELATED APPLICATIONS

This application claims priority under 35 U.S.C. § 119 to United States Provisional Patent Application No. 63/716,621 filed on November 5, 2024, the entire contents of which is incorporated herein by reference.

### BACKGROUND

Heat trace solutions utilize electric heating elements, such as electric heat trace cables, to apply heat to an external surface. Such heat trace solutions may be used to keep critical processes operational, protect pipes and equipment from freezing, keep the flow in transfer lines, and provide winter safety and comfort heating in buildings and homes. Example heat trace applications can include, but are not limited to: temperature maintenance (e.g., to ensure a specialized hot water supply to keep fluids and liquids at desired temperature levels and/or protect critical safety lines); industrial tank insulation systems (e.g., to keep stored liquids at a constant temperature); industrial, commercial, and residential surface snow melting; roof and gutter deicing; fire-rated wiring (e.g., to protect critical electrical circuits during a fire or other emergency); process temperature maintenance (e.g., ensuring fluid temperature maintenance with industrial process heating equipment); pipe freeze protection; offshore and maritime anti-icing and de-icing; industrial, commercial, and residential flow maintenance (e.g., maintaining the temperature of fluids in pipes to ensure continuous flow); long pipeline heating; rail heating; and frost heave protection.

Looking to one particular example, piping systems are often used to transport a liquid and/or gas product, such as a petroleum product, over large distances, such as from an extraction point to a processing facility. If the extraction location and/or the processing facility are located in a cold weather environment, it may be necessary to provide heat trace cables to maintain the pipe at a desired temperature to prevent the fluid product from freezing, or in temperature sensitive operations, to maintain a temperature that allows for an efficient flow of the fluid product.

One or more electric heat trace cables, along with any associated components, can be known as an electric heating trace (EHT) circuit. Furthermore, each EHT circuit is monitored and controlled by a heat trace controller. Heat trace controllers can have multiple functionalities and, often, certain applications contain multiple EHT circuits with multiple respective EHT controllers. These EHT controllers are often connected to a supervisor, or management system, via Modbus data communications protocols over RS-485 serial lines.

### SUMMARY

In some embodiments, a communication method for a device within a control system comprising a plurality of devices in communication with a management system is provided. The method includes receiving, by an edge module connected to the device, a first Modbus packet from the management system over a communication line. The first Modbus packet comprises a block write command to a first contiguous array of registers of the edge module, collectively designated as a command buffer, wherein the block write command corresponds to a request for the device to perform an action, and a block read command to a second contiguous array of registers of the edge module, collectively designated as a response buffer. The edge module interprets the request based on data within the command buffer, including determining registers of the device associated with the request. The edge module generates and sends a second Modbus packet comprising a command to the determined registers of the connected device for the device to perform the action. The edge module writes data into the response buffer based on the device performing the action, to be read by the management system.

In some embodiments, an edge module configured to be connected between a management system and a device of an industrial system is provided. In this embodiment, the edge module comprises an upstream serial port, a downstream serial port, and a microcontroller comprising a memory storing program instructions and a processor to carry out the program instructions. The processor receives a first Modbus packet comprising a multi-register write command to a first contiguous array of Modbus registers, designated as a command buffer, sent across a communication link from the management system to the upstream serial port. The processor translates the multi-register write command by mapping Modbus registers of the device that are associated with the multi-register write command. The processor generates and sends a second Modbus packet comprising a command to the mapped registers of the device via the downstream serial port.

In some embodiments, a method for an edge module to override a host device in an industrial control system is provided. In this embodiment, the method comprises identifying, by the edge module, a type of the host device by probing the host device via a downstream port of the edge module to determine device information. The edge module maps resources of the host device, wherein the mapping includes determining register addresses of each resource. The edge module conditions the host device to be passive by disabling automatic control modes. The edge module overrides executive control of the host device by directly accessing and manipulating the resources of the host device in response to action commands from a management system.

Aspects and embodiments of the invention are defined in the claims. Feature(s) of the aspects/embodiments of the invention or features otherwise disclosed herein may be used separately, together and/or be interchangeable wherever possible. Where features are, for brevity, described in the context of a single embodiment, those features may also be provided separately or in any suitable sub-combination. Features described in connection with the edge module and/or system, or any feature(s) or component(s) described, may have corresponding features definable and/or combinable with respect to a method or vice versa, and these embodiments are specifically envisaged.

### DESCRIPTION OF THE DRAWINGS

The accompanying drawings, which are incorporated in and form a part of this specification, illustrate embodiments of the invention and, together with the description, serve to explain the principles of embodiments of the invention.
FIG. 1 is a schematic diagram of an electric heat trace (EHT) control system, according to some embodiments.
FIG. 2 is a schematic diagram of an industrial control system, according to some embodiments.
FIG. 3 is a schematic diagram of an industrial control system including edge modules, according to some embodiments.
FIG. 4 is a schematic diagram of an edge module, according to some embodiments.
FIG. 5 is a flow chart of an example operation of the edge module of FIG. 4, according to some embodiments.
FIG. 6 is a schematic representation of arrays of Modbus registers of a device, according to some embodiments.
FIG. 7 is a schematic representation of a Modbus packet, according to some embodiments.
FIG. 8 is a flow chart of an example command/response communications protocol, according to some embodiments.
FIG. 9 is a flow chart of an example asynchronous command/response communications protocol, according to some embodiments.
FIG. 10 is a flow chart of an override operation process, according to some embodiments.
FIG. 11 is a cross-sectional view of an edge module, according to some embodiments.
FIG. 12 is an isometric view of another edge module, according to some embodiments.
FIG. 13 is a cross-sectional view of the edge module of FIG. 12, according to some embodiments.
FIG. 14 is an isometric view of yet another edge module, according to some embodiments.
FIG. 15 is a cutaway view of the edge module of FIG. 14, according to some embodiments.
FIG. 16 is a schematic diagram of a redundant edge module configuration, according to some embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

The discussion herein is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Heat trace systems may include heating elements, e.g., heat trace cables, to control the temperature of a surface, such as a pipe surface to control the temperature or flow of fluid being transported therein. Each heating element along with its associated components can be known as an electric heat trace (EHT) circuit. Furthermore, each EHT circuit may have a dedicated controller (an "EHT controller") for controlling and/or monitoring the EHT circuit. Example EHT controllers may be adapted for, for example, flow maintenance, frost prevention, hot water temperature maintenance, process temperature maintenance, deicing, anti-icing, or other applications. Generally, each EHT controller may be configured to receive and monitor data related to, for example, surface temperature, fluid flow, fluid temperature, heating element current, and/or other pertinent information related to the EHT circuit and control the heating element accordingly.

A user can configure the EHT controller with a desired configuration, including desired alarm values, data requests, on/off temperature thresholds, etc. Such data can be communicated to the user via a monitoring system server connected to the EHT controller. Conventional heat trace systems, however, can struggle to support proper data harvesting and control, as data is transmitted at relatively slow rates due to storage and bandwidth limitations of associated connection lines.

For example, many applications often include a plurality of EHT circuits, resulting in a plurality of EHT controllers within such systems, and each EHT controller may have the same or different functionality, including different firmware and hardware (and different firmware versions). Further, EHT controllers are generally connected to management systems using slow and often unreliable Modbus communications protocols over RS-485 serial lines. It is not unusual for hundreds of devices to share a single RS-485 line, which is often also electrically over-length. It is also not unusual for RS-485 lines to be shared by equipment from multiple vendors.

For example, Modbus communication over multi-drop RS-485 lines at 9600 baud gives about 1 kilobyte (kbyte) per second usable capacity. When, for example, one hundred devices share this channel, this results in just ten bytes per second per device, after factoring for framing overhead. Further factoring arbitration and collisions and soft bit errors and retries and back-offs and timeouts, it is not hard to understand why some lines today can take minutes to settle in response to a status read.

Notwithstanding communication speed over these lines, in traditional Modbus communication, there is also no command queue. Rather, a single register operation is in flight at any time for a given bus segment. In the case of read operations, the bus is fully occupied during outgoing read packet transmission, the turn-around response time of the target device, and the incoming read response transmission. With some EHT controllers, a bridge must receive the Modbus packet, decode it, generate CAN bus traffic to access its respective target module to recover the data required, compose the read response, and transmit it back to the management system. This can take a considerable amount of time, which is dead time as far as all other devices are concerned. Accordingly, if only one transaction is in progress, there can be no opportunity for parallel transactions across multiple target EHT controllers, seriously limiting throughput at the system level.

Furthermore, many present communications protocols generally assume that every actor on the bus is friendly (and competent). With an anticipated growth in multi-vendor buses, these assumptions may not hold. For example, one current Modbus protocol is open plain text with no native mechanism for encryption or authentication. The corresponding application programming interface (API) is a wide open array of registers to be read from or written to by any agent on the bus able to put together a valid Modbus packet. As such, in some applications, Modbus traffic in a heat trace system may be open for all to see and, so, any entity on the shared wire connections can arbitrarily manipulate any other entity.

Additionally, each EHT controller can be represented by hundreds or thousands of low-level registers (with 16-bit integers) that may be written to when changing controller configurations and read from to extract sensor and performance data. The corresponding management system must map registers for each individual EHT controller, as these registers vary based on controller type (e.g., based on vendor, model number, firmware version number, and/or current relevant controller internal state). That is, a management system talking to many different kinds of devices must incorporate code to handle each specific device. Effectively, the low level driver logic for each device does not live in the device but, rather, the management system is obliged to muster appropriate business logic for all the above permutations. This not only forces a lot of complexity onto the management system, it also creates a huge maintenance burden-each time device behavior changes with new firmware drops, the management system must be updated accordingly.

As such, it is easy to make errors and produce invalid configuration states with this arrangement, resulting in potential false alarms or unwanted thermal regulation behaviors in certain EHT circuits. The process of validating a configuration could be performed by the management system by reading back all the registers and making consistency checks on its remote server, yet such validation processes may be bandwidth-prohibitive.

Accordingly, effecting configuration changes may involve numerous Modbus register changes, creating significant traffic on the wire, exacerbating the above-described overload problems. Additionally, operationally, many devices may need to be adjusted at the same time in response to events such as an emergency shutdown, load balancing, or process changes across many circuits. Network traffic is very bursty, but it is precisely during such activity peaks when smooth traffic flow would be most critical. As another example situation, a system may be left in an internally inconsistent state while writes are being performed for a configuration update. If significant interruptions occur during this reconfiguration period, mal-configurations could arise.

In light of the above, present Modbus protocols can be lacking in error control, authentication, and encryption, and operate with register maps at a low level, causing management systems to be overburdened. As the needs of heat trace systems--and industrial systems in general--evolve, including the desire for increased data compiling for analytics, it would be beneficial to provide a way to make secure, efficient, and reliable access to EHT controllers possible while co-existing with standard Modbus traffic. Embodiments of the disclosed invention provide such a solution to address these and other issues.

More specifically, some embodiments provide such a solution by replacing low-level register accesses with high level commands that are communicated in arrays of adjacent Modbus registers, treated collectively as communication buffers. These strings are processed into Modbus packets to improve performance on noisy lines, greatly reduce wire traffic, and introduce security through encryption and authentication protocols. These systems and methods aim to address the above issues while maintaining interoperability with all existing devices on shared Modbus links. While embodiments are described herein with respect to heat trace systems and, particularly, devices such as EHT controllers, it should be noted that the present systems and methods of some embodiments may be applicable to any devices controlled across Modbus links in any type of control system including, for example industrial control and automation systems.

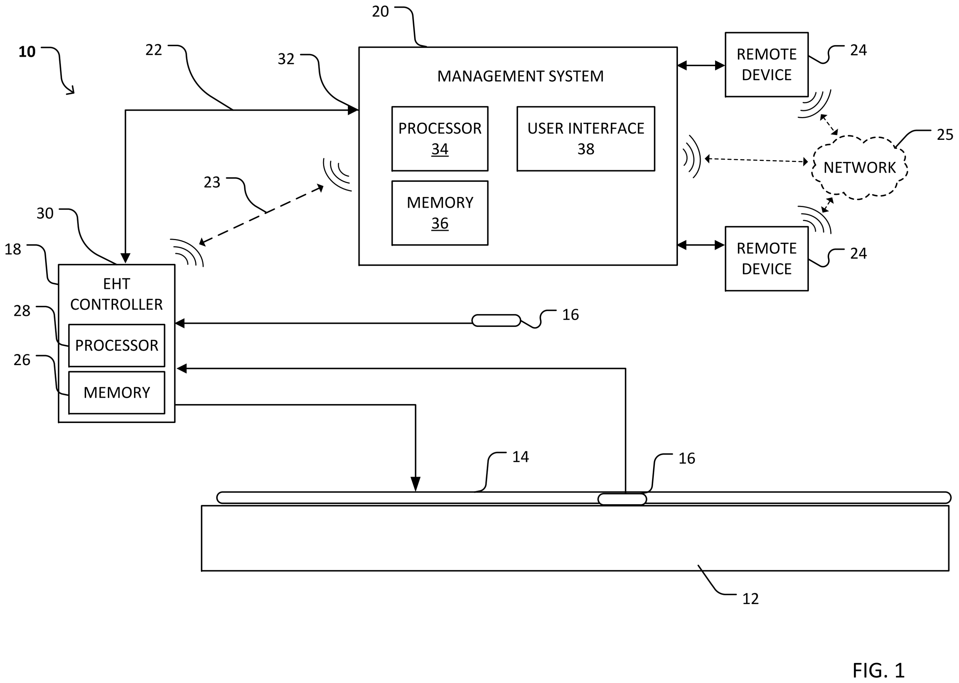

Accordingly, FIG. 1 illustrates an example electric heat trace (EHT) control system 10 according to some embodiments of the invention. The EHT control system 10 can be used to heat a surface 12 and monitor the surface 12 and/or its surrounding environment. As such, the EHT control system 10 can include one or more heat trace cables 14, one or more sensors 16, and an EHT controller 18. Furthermore, the EHT controller 18 can communicate with a management system 20 via a wired connection 22, such as an RS-485 serial connection or an ethernet connection, and/or wireless point-to-point or mesh connections 23 (e.g., Wi-Fi, Wi-SUN, Zigbee, Bluetooth^{®}, etc.). The management system 20 may also be further connected to one or more remote devices 24 (e.g., remote user interfaces).

Regarding the surface 12 in FIG. 1, the EHT control system 10 can be used to heat any type of surface in industrial, commercial, or residential applications via the heat trace cables 14. Example surfaces in industrial applications can include, but are not limited to: a pipe that requires freeze protection, such as water supply and drain lines, safety showers and eye washers, firefighting and sprinkler systems, and sewage and sanitary systems; a pipe that requires process temperature maintenance, such as in oil and gas, petrochemical, power, pharma, paper, and food and beverage industries; a pipeline that requires freeze protection, viscosity control, and/or temperature maintenance, such as for heavy oil or Sulphur transport between processing plants, storage tanks, and transportation facilities; foundations or concrete slabs that require frost heave prevention, such as those surfaces in liquified natural gas (LNG) terminals and on cryogenic and low temperature storage tanks; storage tanks that require heating, such as those that store sensitive industrial liquids, to prevent freezing or solidifying and facilitate smooth loading and unloading processes; and/or surfaces in offshore maritime environments, such for heated walkways and stairs, communications equipment; helidecks and lifeboats, etc. Example surfaces in commercial and residential applications can include, but are not limited to: a pipe that requires freeze protection, such as water supply and drain lines, safety showers and eye washers, firefighting and sprinkler systems; sewage and sanitary systems; floors and/or stairs to be heated; roofs and gutters that require deicing; and/or outdoor driveways, walkways, patios, emergency accesses that require surface snow melt, etc.

Referring still to FIG. 1, the heat trace cable 14 of some embodiments can be, for example, any type of heating cable for heating the surface 12. Example heat trace cables 14 include, but are not limited to, self-regulating heating cables, constant wattage heating cables, mineral insulated heating cables, polymer insulated heating cables, skin-effect heating cables, power-limiting heating cables, among others. In reference to pipe heating applications, the heating trace cable 14 can be adapted to heat the pipe surface 12 in order to heat fluid within the pipe. In reference to skin-effect heating cables systems, the heat trace cable 14 can be routed through an additional heat tube (not shown) to heat the surface 12. Additionally, the heat trace cable 14 can include a plurality of heat trace cables 14 in some applications, which can be coupled together, in series or parallel, so that the heat trace cables 14 may be energized or not energized in unison. For example, the heat trace cables 14 can be coupled to a power source (not shown) and power to the heat trace cables 14 from the power source can be controlled via the EHT controller 18. Furthermore, in some applications, the system 10 can incorporate additional components with the heat trace cables 14 to enable lengths of EHT circuits, such as, but not limited to, transformers, power connection boxes, pull boxes, splice boxes, and/or end termination boxes.

Referring still to FIG. 1, in some applications, the EHT control system 10 can utilize one or more sensors 16 to monitor a status of the system 10. For example, the system 10 can include one or more sensors 16 configured to sense surface temperature, fluid temperature, ambient temperature, flow through pipes (in pipe heating applications), current to heat trace cables 14, among other variables. The sensors 16 may be wirelessly connected (e.g., using Wi-Fi, Zigbee, Bluetooth, etc.) to the EHT controller 18 or coupled to the EHT controller 18 using a wired connection (e.g., a three-wire connection or another connection). In some embodiments, a network of wireless sensors 16 may communicate with the EHT controller 18 using a mesh communication protocol.

According to one example, as illustrated in FIG. 1, a sensor 16 can be placed on an exterior of the surface 12 to sense surface temperature and another sensor 16 can be separate from the surface 12 (e.g., positioned in an area near the surface 12) to sense ambient air temperature. Such sensors 16 can include a resistance thermometer, resistance temperature detector (RTD), or other applicable sensors capable of detecting a temperature. In pipe heating applications, fluid temperature and flow may vary along a length of a pipe, or may vary between different pipes. In such cases, multiple sensors 16 can be used to monitor multiple temperatures at different locations along, in, or near the piping system. Alternatively, in such cases, the sensors 16 can include a distributed temperature sensing (DTS) system. For example, DTS systems may be fiber optic-based systems capable of generating spatio-temporal temperature data along a length of the surface 12.

In further examples, such as in pipe heating applications, sensors 16 can be configured to measure a flow of fluid within pipes of the piping system. For example, sensors 16 configured to monitor a flow of the fluid within the pipes can be utilized to alert users of low flow (e.g., a stoppage of flow) of fluid within the pipes. Such sensors 16 can be flow meters or other suitable devices that can measure one or more parameters related to fluid flow, such as flow rate or change of fluid temperature over time. In yet further examples, the system 10 may also include sensors 16 configured to measure other pertinent status values, such as ground fault current. Any of these sensors 16 can be communicatively coupled to the EHT controller 18 to provide data to the EHT controller 18 for monitoring and EHT system management.

Referring back to FIG. 1, an EHT controller 18 can include a memory 26 configured to store data and EHT monitoring, control, and/or communications protocol programs, and a processor 28 configured to execute such programs. For example, in some embodiments, an EHT controller 18 can be a programmable logic controller (PLC). The memory 26 can be, in some embodiments, a non-transitory machine-readable medium, such as random-access memory (RAM), read-only memory (ROM), electrically erasable programmable read-only memory (EEPROM), flash memory, a storage drive, an optical disc, or similar. The EHT controller 18 can also include a user interface (not shown) in some embodiments as well as one or more ports 30, such as serial communication ports, ethernet ports, or other ports, e.g., for connection to the management system 20.

Generally, EHT controllers 18 can include a core independent function: monitoring variables such as temperature, current, etc., controlling the EHT circuit, and generating alarms to alert a user of an alarm condition. Accordingly, EHT controllers 18, e.g., the corresponding processors 28 executing the management programs, can be configured to receive outputs from the one or more sensors 16, and can decide to perform one or more actions, such as energize heat trace cables 14, de-energize heat trace cables 14, or alert a user to a current or potential malfunction of the system 10, based on the outputs from the sensors 16. These alerts can be communicated to the user via the management system 20, as further described below.

More specifically, looking to the example of FIG. 1, the EHT controller 18 can be coupled to the sensors 16 in order to receive status values (e.g., temperature values, flow status values, or other pertinent values) relating to temperature, fluid flow, or other pertinent variables. The EHT controller 18 may be configured to store the status values from the sensors 16 in the memory 26 and communicate the status values to the management system 20.

Furthermore, the EHT controller 18 can be configured to selectively energize and de-energize the heat trace cables 14 based on the status values. For example, the EHT controller 18 may compare the status values to a number of thresholds for heat trace cable management as well as alarm management. Additionally, the EHT controller 18 can be configured to alert a user of a malfunction of the EHT control system 10. For example, an EHT controller 18 can issue an alert when certain alarm conditions exist such as, but not limited to, a sensed temperature of the surface 12 becoming too low, a flow of the fluid within a pipe is too slow or stopped, or when a ground fault current along the EHT circuit becomes too high. At such time, the EHT controller 18 can sound an alarm, communicate an alarm flag to the management system 20, and/or shut off power to the heat trace cables 14.

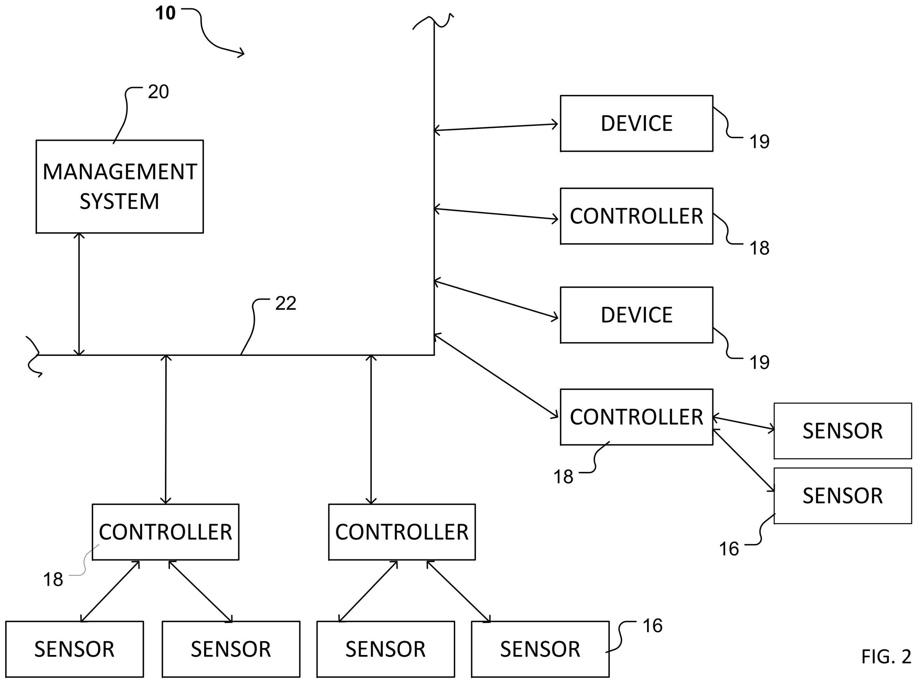

Referring back to FIG. 1, the management system 20 can include one or more ports 32, such as serial communication ports or ethernet ports, to enable the management system 20 to be coupled to a device, such as the EHT controller 18 or another device, via a wired (e.g., RS-485 or ethernet) connection 22 and/or wireless connections 23. It should be noted that, while the following discussion will generally be referencing the connection 22 as an RS-485 line, any of the embodiments described herein are equally applicable to ethernet connections, each typically carrying Modbus protocol frames, or wireless communication protocols carrying Modbus protocol frames. Accordingly, the management system 20 can be coupled to a plurality of EHT controllers 18 along the RS-485 line 22, receiving status values, alarms, etc. in one centralized place for a user to monitor and/or control the system 10. For example, while the EHT controllers 18 may be located "in the field" generally near the surfaces 12 to be heated, the management system 20 may be a centralized supervisor system located in a control facility away from the surfaces 12. As another example, FIG. 2 illustrates an example system 10 including the management system 20 connected to a plurality of EHT controllers 18 and/or other devices 19 (e.g., other sensors, PLCs, programmable automation controllers (PACs) and/or actuators) along an RS-485 connection 22. For example, the system 10 can include point-to-point or multi-drop (daisy chain) network topologies typical of Modbus RTU environments.

In some embodiments, as shown in FIG. 1, the management system 20 can be a supervisory computing device, including memory 36 (a non-transitory machine-readable medium storing data and/or instructions), a processor 34 that executes the instructions, and a user interface 38 that displays information to a user and/or receives inputs from the user. The management system 20 can also be in communication with the remote devices 24, which may also include user interfaces, allowing a user to remotely view information and/or provide inputs to the management system 20. For example, remote devices 24 can include, but are not limited to, mobile devices, tablets, remote personal computers, etc. For example, the management system 20 may communicate with the remove devices 24 via wired connections or wirelessly, e.g., over a network 25. Accordingly, information displayed to a user may be displayed at the management system 20 or at a remote device 24 in communication with the management system 20 and control inputs provided to the management system 20 may be provided directly at the management system 20 (e.g., via user inputs to the user interface 38, such as a keyboard) or via a remote device 24 in communication with the management system 20. Thus, a user interface of the system 10 can be considered the user interface 38 of the management system 20 or of the remote device 24.

Generally, the management system 20 can include instructions stored in the memory 36 and carried out by the processor 34 to perform certain functions. For example, such instructions can include an application programming interface (API) for communicating with EHT controllers 18. For example, the API can include instructions for writing a desired configuration to the EHT controller 18, e.g., as provided by a user through the user interface 38, such as providing threshold values for alarm levels, providing threshold values for heat trace cable function, etc. It should be noted that, throughout the present disclosure, reference to the management system 20 performing certain actions can equate to the processor 34 of the management system 20 carrying out program instructions stored in the memory 36, such as executing the API or other programs. Furthermore, the management system 20, through the API, can also request data from the EHT controller 18, and the EHT controller 18 (through its processor 28 carrying out instructions stored in memory 26) can communicate data to the management system 20 in response to the data request. The management system 20 can check for alarm flags, request alarm data, and clear alarm flags, and the EHT controller 18 can correspondingly return alarm flags and return alarm data to the management system 20. The "alarm data" in this example can be the status values and/or other data after an alarm is tripped.

Accordingly, the management system 20 acts as a central parent device (e.g., a master or initiator) that interrogates child EHT controllers 18 (e.g., slaves or responders) periodically for information. Such communication is generally done via Modbus protocols over the RS-485 connection 22 (or other wired or wireless connection). As discussed above, conventionally, the management system 20 maps all low-level registers of the particular EHT controller 18 in order to properly communicate with the EHT controller 18. That is, communications with a specific EHT controller 18 require the management system 20 to provide read or write instructions to specific registers with specific data in order to carry out requests. Each register has an assigned fixed function, conventionally listed in the Modbus register map of the device 18.

Instead of sequences of hundreds of low-level register manipulations to manage an EHT controller 18 at every turn (e.g., a conventional register map approach), some embodiments provide a command/response protocol that leverages the Modbus register map in a totally different way (e.g., a command/response approach). That is, rather than writing to particular registers for a particular EHT controller 18 based on how something should be done by the EHT controller 18, the management system 20 can write a universal, high-level command based on what it needs an EHT controller 18 to do. This can minimize or completely eliminate the need for the management system 20 to have and maintain a map of registers for each EHT controller 18 (e.g., based on type, vendor, firmware version, etc.) in order for the management system 20 to communicate with the EHT controllers 18. That is, according to some embodiments, device (e.g., controller)-specific details do not permeate beyond the data model (driver) layer. The management system 20 can be capable of communicating with any EHT controller 18 in a manner that is secure, efficient, and robust, despite a slow and unreliable physical layer (e.g., RS-485 at 9600 baud), while simultaneously remaining compatible with standard Modbus traffic.

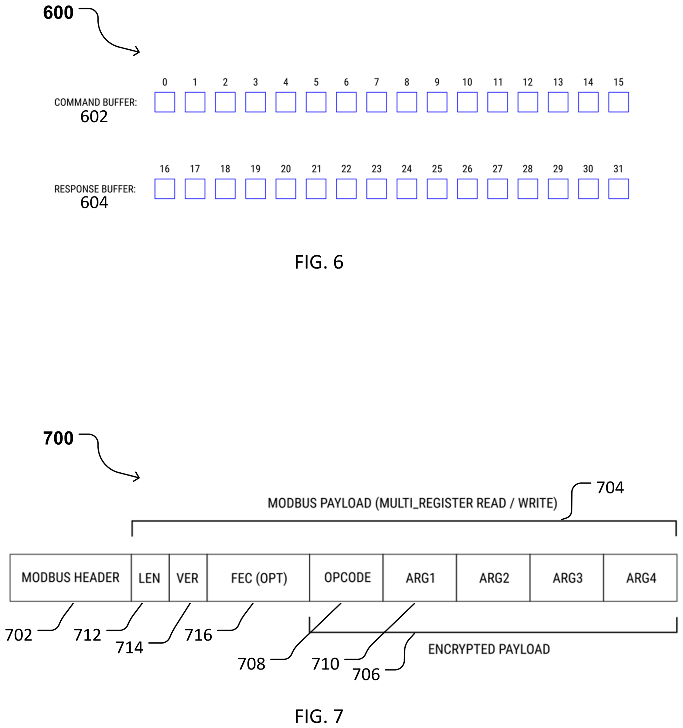

Thus, some embodiments provide a command/response communications protocol between devices over an RS-485 line 22. Such protocol can be enabled via APIs stored in both the management system 20 and the corresponding device 18, 19. For example, Modbus communication over RS-485 lines supports multi-register reads and writes in a single Modbus transaction, providing an efficient way to move bytes across the wire 22, since many bytes can move while incurring packet overhead only once. According to the command/response protocol of some embodiments, block reads and writes can operate on a vector of contiguous Modbus registers. More specifically, an array of contiguous registers in an EHT controller 18 (or other device 19) can be treated as a command input buffer, with commands communicated via a multi-register write function over those command registers, and a second array of contiguous registers in the EHT controller 18 (or other device 19) can be treated as a response buffer with responses communicated via a multi-register read function over those response registers, as further described below with respect to FIGS. 6 and 7.

While new EHT controllers 18, 19 can be designed to support the command/response control scheme from the outset, a large installed base of older equipment based on the register-mapped control scheme already exists. Accordingly, in the case of EHT controllers 18 that do not have the capability of such command/response protocols (e.g., older "legacy" devices, devices from third parties, etc.), some embodiments provide an edge module (also considered an edge security module ("ESM") or command response module ("CRM")) that can act as a dedicated two-way translator along an RS-485 line 22 between upstream command/response Modbus communications from a management system 20 and downstream traditional Modbus register communications to an EHT controller 18 or other device 19.

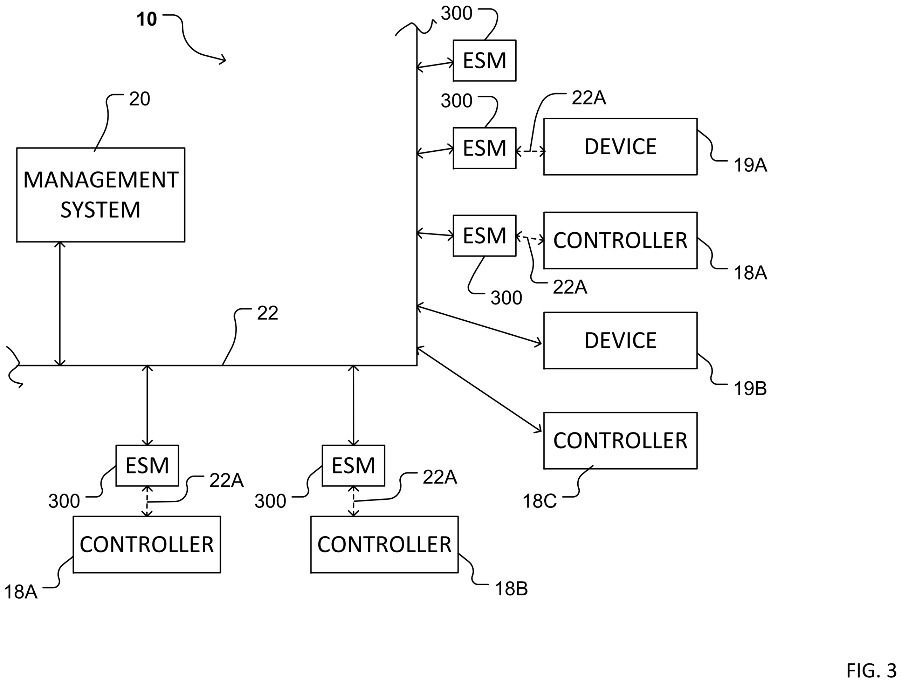

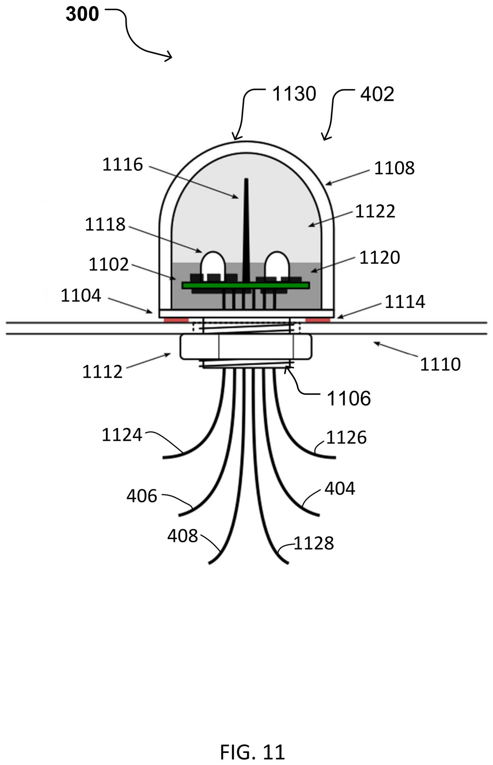

For example, FIG. 3 illustrates another example system 10 including a plurality of EHT controllers 18 and/or other devices 19 in communication with the management system 20 over a shared connection 22. The management system 20 is configured to communicate via a command/response Modbus protocol, as further described below. The EHT controllers 18 include first EHT controllers 18A that are older "legacy" controllers configured to communicate via traditional Modbus register communications protocols, second EHT controllers 18B that are third-party controllers configured to communicate via traditional Modbus register communications protocols, and third EHT controllers 18C configured to communicate via the command/response Modbus protocol. Furthermore, the other devices 19 include a first device 19A configured to communicate via traditional Modbus register communications protocols and a second device 19B configured to communicate via the command/response Modbus protocol. Being configured to communicate via the command/response Modbus protocol means that the device 18, 19 enables such protocol, for example, via APIs stored in the corresponding memory of the device 18, 19. The devices 18A, 18B, 19A configured for traditional Modbus register communications may lack the capabilities or capacity to enable communication via the command/response Modbus protocol. Additionally, the system 10 can include one or more edge modules 300 ("edge security modules," "ESMs," or "command processor modules," "CRMs"), where each edge module 300 may be connected between the management system 20 and a respective device 18, 19, or may act as a stand-alone "device" itself (e.g., on its own or integrating with another device operating within the system 10 but not previously connected to or controlled by the management system 20, as described in more detail below with respect to FIGS. 11-15).

More specifically, as shown in FIG. 3, each device 18C, 19B configured to communicate via the command/response Modbus protocol is connected along the RS-485 line 22 directly to the management system 20. The management system 20 can write a universal, high-level command based on what it needs the particular device 18C, 19B to do. The corresponding device 18C, 19B can interpret the high-level command from the management system 20 and carry out the desired command. On the other hand, each device 18A, 18B, 19A configured to communicate via traditional Modbus register communications is connected along the RS-485 line 22 to the management system 20 indirectly via a respective edge module 300. The management system 20 can write a universal, high-level command based on what it needs the particular device 18A, 18B, 19A to do. The corresponding edge module 300 can maintain a map of registers for its connected device 18, 19 (e.g., based on type, vendor, firmware version, etc.), can interpret the high-level command from the management system 20, and can output a traditional Modbus packet, based on the stored register map, to the device 18, 19 to enable the device 18, 19 to carry out the desired command. As such, in contrast to traditional gateways, the function code and data payloads of the incoming Modbus packet from the management system 20 differs from those generated for the outgoing Modbus packet to the device 18, 19, as the command/response Modbus protocol is only directed to dedicated command and response buffer arrays of registers. Thus, the edge module 300 enables the management system 20 to discover and interoperate with all devices 18, 19 through a single unified API by allowing all devices 18, 19-old, contemporary, and yet-to-be-designed-to work with the command/response protocol.

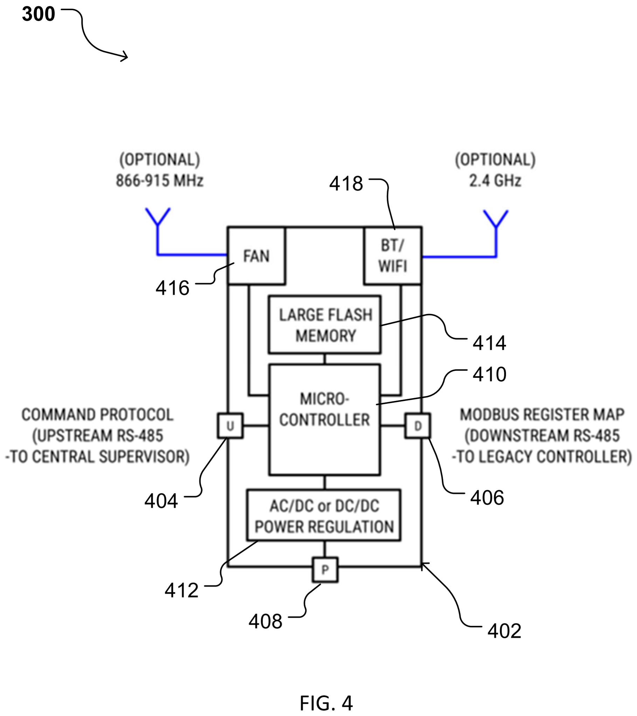

Accordingly, FIG. 4 illustrates an example schematic layout of an edge module 300 according to some embodiments. Generally, the edge module 300 can be a small, low-cost microcontroller system with on-board memory and sufficient processing power to present a command/response target to the management system 20 on its upstream RS-485 port (or other wired port or wireless connection interface) and generate traditional Modbus register read/write traffic on its downstream RS-485 port (or other wired port or wireless connection interface). More specifically, as shown in FIG. 4, the edge module 300 can include a housing 402 with an upstream port 404, a downstream port 406, and a power port 408. Internally, the edge module 300 can include a microcontroller 410, a power regulator 412, and a memory 414. Additionally, optionally, in some embodiments, the edge module 300 can include wireless modules, such as a field area network (FAN) module 416 and/or a Bluetooth or Wi-Fi module 418.

Referring still to FIG. 4, in some embodiments, the housing 402 can take on various packaging options suitable to accommodate installation requirements for particular devices 18, 19 with a minimal footprint. According to one example, the housing 402 may simply comprise a printed circuit board assembly (PCBA) shrink-wrapped or dipped with protruding wire terminals serving as the ports 404, 406, 408. As a result, in some embodiments, the entire edge module 300 may be physically small, e.g., around 2.5 centimeters by 5 centimeters in size. Alternatively, for certain device types, the PCBA may not be wrapped or dipped but, rather, wired into a wiring cavity of the device 18, 19. According to another example, the housing 402 may have a thin DIN-rail form-factor integrating wire terminals for the ports 404, 406, 408. For example, the housing 402 may take on the size and form-factor of a standard miniature relay. In yet other examples, the housing 402 may fully encase the PCBA and be configured to be mounted to, or mounted adjacent to, a device 18, 19. In some embodiments, the edge module 300 can include the same PCBA packaged in different form-factors to better accommodate various specific devices 18, 19. Further example form factors are described in further detail below with respect to FIGS. 11-15.

Generally, regardless of the housing design, the edge module 300 can be physically mounted immediately adjacent to or on its respective device 18, 19 so a downstream RS-485 link 22A (shown in FIG. 3) off of the downstream port 406 can be very short (e.g., in the range of a few centimeters to a few inches) and electrically pristine with appropriate structured termination. As a result, the edge module 300 can drive lots of traffic on the downstream link 22A without contention from any other device in the system 10, as it is a short, dedicated point to point connection with its connected device 18, 19. Additionally, in some embodiments, the housing 402 can be fully potted to allow the edge module 300 to match hazardous location ratings for its targeted devices 18, 19, tamper resistance, and robustness. Furthermore, the low power nature of the edge module 300 can make having an intrinsic safety rating highly feasible.

Accordingly, referring still to FIG. 4, the edge module 300 can include the upstream port 404, the downstream port 406, and the power port 408. The upstream port 404 can be a serial port configured to interface with, for example, an RS-485 line 22 for communication with the management system 20. The downstream port 406 can also be a serial port configured to interface with the dedicated RS-485 line 22A for communication with a respective device 18, 19. For example, as further described below, the edge module 300, via the upstream port 404, can communicate with the management system 20 via the command/response Modbus protocol and, via the downstream port 406, can read from and write to Modbus registers of the connected device 18, 19. In some embodiments, the upstream and downstream ports 404, 406 are RS-485 ports configured to run at 9600 baud rate.

While the edge module 300 includes the wired connection ports 404, 406, in some embodiments, the edge module 300 can also be configured for wireless communication and, thus, allow for communication via wireless Modbus protocols. For example, the edge module 300 can include optional wireless modules, such as the FAN module 416 and/or the Bluetooth/Wi-Fi module 418. Accordingly, in some embodiments, the edge module 300 and, more specifically, the microcontroller 410 can be configured to communicate with the management system 20, other edge modules 300, other devices 18, 19, and/or remote devices 24 wirelessly via the FAN module 416 and/or the Bluetooth/Wi-Fi module 418. As such, the edge module 300 can provide legacy or third-party devices 18, 19 with no wireless capabilities the ability to participate in robust mesh networks or point-to-point networks.

For example, in some embodiments, the microcontroller 410 can include integrated Bluetooth and Wi-Fi radios. Furthermore, in some embodiments, wireless antennas supporting the Bluetooth/Wi-Fi module 418 can be printed directly onto the PCBA of the edge module 300. As a result, the edge modules 300 can communicate with the management system 20 via the Bluetooth/Wi-Fi module 418, e.g., using a mesh network or point-to-point links. The Bluetooth/Wi-Fi module 418 may, therefore, provide a secondary communication option in place of the wired bus 22, allowing continued system operation in the event of a broken bus 22. Additionally, in some embodiments, local administrators in the field may be able to connect to and communicate with a particular edge module 300 via, for example, a remote device 24 such as a mobile phone or tablet through a Bluetooth connection.

According to another example, in some embodiments, the FAN module 416 can enable long-range mesh networking across the system 10 via a wireless smart utility network (Wi-SUN). In such embodiments, the management system 20 can also comprise a corresponding FAN module (e.g., a Wi-SUN module), designed to serve as the Wi-SUN router, bridging the mesh to the wired networks. An edge module 300, including a FAN module 416, can thus bring a remote, previously unconnected device 18, 19 into communication with the management system 20. Furthermore, in some applications, the edge module 300 can leverage the FAN module 416 in lieu of the upstream port 404. For example, rather than an integrated FAN module 416, in some embodiments, a separate FAN module 416 can be interfaced with the upstream port 404. With this configuration, the edge module 300 can provide legacy or third-party devices 18, 19 the ability to participate in robust mesh networks, aggregating devices 18, 19 in the system 10 where no hardwired infrastructure is available.

Referring still to FIG. 4, the edge module 300 can include the power port 408. The power port 408 can be configured to receive power from, for example, an alternating current (AC) or direct current (DC) power source (not shown) to power the edge module 300. In some embodiments, the edge module 300 can have relatively small power requirements. In one example, the edge module 300 is rated for less than 2 Watts. In another example, the edge module 300 is rated for around 2-3 Watts.

Power from the outside power source can be routed to the microcontroller 410 via the power regulator 412. For example, in some embodiments, the power regulator 412 can be an AC/DC power regulator or DC/DC power regulator depending on the anticipated power source. In some embodiments, the microcontroller 410 can include memory (e.g., computer-readable storage medium, including random-access memory (RAM)) configured to store, e.g., program instructions, such as one or more APIs, and one or more processors configured to execute the program instructions. The edge module 300 also includes memory 414, such as Flash memory (e.g., a non-volatile computer storage medium), in communication with the microcontroller 410. In some embodiments, the memory 414 can be used for data storage, such as for data logging, as further described below. While the memory 414 (and memory of the microcontroller 410) are described above as optionally having specific non-transitory machine-readable media, they may additionally or alternatively include other forms of non-transitory machine-readable media in some embodiments, such as random-access memory (RAM), read-only memory (ROM), electrically erasable programmable read-only memory (EEPROM), flash memory, a storage drive, an optical disc, or similar.

As noted above, the microcontroller 410 can include memory for storing program instructions, such as one or more APIs, and one or more processors configured to execute the program instructions. It should be noted that any description herein of the edge module 300 executing certain actions can equate to the microcontroller 410 of the edge module 300 executing such actions (e.g., through the processor of the microcontroller 410). In some embodiments, the microcontroller 410 can execute the program instructions to operate in a "translate mode," to provide bi-directional interpretation between the Modbus register mapped control scheme of the downstream device 18, 19 and the command/response Modbus protocol of the upstream management system 20. To do so, the microcontroller 410 can store, in its memory or in the flash memory 414, a Modbus register map of the connected device 18 and can then translate incoming universal commands from the management system 20 into appropriate configuration settings (e.g., traditional Modbus register read/write sequences) for its connected device 18, 19, while allowing the device 18, 19 to retain its autonomous operational control. In some embodiments, the microcontroller 410 can also execute the program instructions to operate in an "override mode." In override mode, the microcontroller 410 assumes executive control of the connected device 18, 19 by directly accessing and controlling its low-level functions while rendering the device passive.

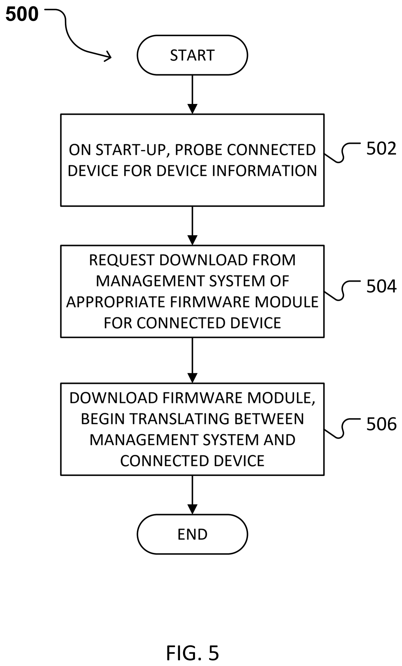

FIG. 5 illustrates an example setup and operation process 500 of an edge module 300 according to some embodiments. As shown in FIG. 5, at step 502, on a first power up after the edge module 300 has been installed within the system 10, the edge module 300 can probe the device 18, 19 it is connected to on its downstream port 406 to determine device information, such as vendor, model, and firmware version. At step 504, when the management system 20 detects the edge module 300 for the first time, e.g., on a routine sweep for devices along the connection line 22, the edge module 300 can identify itself and request the appropriate firmware module be downloaded to allow it to correctly translate for the companion device 18, 19 it is hardwired to. For example, the firmware module can include the specific Modbus register map for the specific vendor, module, and firmware version of the connected device 18, 19. In this manner, the edge module 300 can be considered automatically self-configuring.

Referring still to FIG. 5, at step 506, once the firmware module is downloaded, this module is activated and the edge module 300 can begin mapping between incoming commands from the management system 20 and Modbus register read/write sequences for the companion device 18, 19. That is, the edge module 300 can initiate continuous bi-directional translations between the management system 20 and its connected device 18, 19. By doing so, the edge module 300 presents a normalized controller capability to the management system 20, which no longer needs to understand exactly what underlying device is actually rendering the EHT control, sensor readings, RTD mappings, digital IO capabilities, etc. In view of this process 500, because the companion-specific firmware module is downloaded once attached and the companion device 18, 19 is identified, only a single SKU and firmware pre-load would be necessary for all edge module variants, making edge modules 300 plug and play-type devices.

Alternatively, in some embodiments, the edge module 300 can include pre-downloaded firmware modules prior to being connected to a particular device 18, 19, or can communicate with a separate remote device 24 upon installation to receive a firmware download, e.g., via a Bluetooth or other wireless connection with the remote device 24 in the field. On a first power up, the edge module 300 can probe the device 18, 19 it is connected to on its downstream port 406 to confirm the pre-downloaded firmware modules matches the device information. If so, the edge module 300 can immediately begin mapping between incoming commands from the management system 20 and Modbus register read/write sequences for the companion device 18, 19. If not, the edge module 300 can execute the full process 500 of FIG. 5.

In light of the above, based on the system 10 illustrated in FIG. 3, the management system 20 can issue uniform commands to all devices 18, 19, 300 on the RS-485 line 22 via the command response protocol. These commands can be directed to and interpreted directly by some devices 18C, 19B or indirectly by other devices 19A, 19B, 18C via edge modules 300. Thus, as noted above, under the command/response protocol, each individual device 18C, 19B, and device combination 300/19A, 300/19B, 300/18C is viewed by the management system 20 as a normalized, generic device. That is, using this protocol, heat trace channels can be fully abstracted such that a thoroughly heterogeneous collection of controllers, potentially spanning a mix of vendors, can be forced to present as a regularized resource pool from which the management system 20 is free to compose and aggregate complex virtual controller systems. The management system 20 can see all devices 18, 19, 300 as qualitatively identical, varying only quantitatively in number of EHT circuits, sensors, relays, etc. On the other side, no additional demands are placed on legacy and third-party controllers 18, 19-no firmware updates are necessary to interact with edge modules 300 and low-level register commands coming from the edge modules 300 are no different than what these devices 18, 19 previously received from the management system 20. This is a highly effective way to leverage existing site equipment while elegantly blending in new controllers in a uniform manner.

The command/response protocol will now be described in more detail, specifically with reference to communications between the management system 20 and an edge module 300, according to some embodiments, though such communication may also occur between the management system 20 and other devices 18C, 19B.

For example, FIG. 6 illustrates arrays of registers 600, i.e., Modbus address space, in a device, such as an edge module 300. According to some embodiments, a first region in the Modbus address space for the edge module 300 can be reserved to serve as a command buffer 602, analogous to a command line interface in a computer shell. The command buffer 602 can include a fixed maximum buffer length. In some implementations, the maximum buffer length can be 2700 bytes (e.g., the Modbus limit for multi-write operations), though smaller or larger maximum buffer lengths can be used in other implementations.

Still referring to FIG. 6, another part of the Modbus space 600 can be reserved for the corresponding response buffer 604. Both buffer regions 602, 604 can be located at fixed addresses across all devices 18, 19, 300. In the example shown in FIG. 6, the command buffer 602 includes registers 1-15 and the response buffer 604 includes registers 16-31. However, in some implementations, the register addresses can be chosen to be non-conflicting with existing active register addresses on any device type (e.g., perhaps in high address regions, as they may need to co-exist during a transition from a register map approach to the command/response approach). The command buffer 602 and the response buffer 604 can also contain more than 16 registers each, in some implementations. As a result, this data structure allows the management system 20 to interact with the devices 18, 19, 300 in a completely different way while not breaking interoperability with other devices on the same wire 22 communicating via traditional Modbus protocols.

As noted above, rather than communicating how an EHT controller 18 or other device 19 should act (e.g., by writing to individual registers), the management system 20 can write a universal, high-level command based on what it needs an EHT controller 18 to do. Such a command could, thus, replace many Modbus register-level operations. By way example, such a command could be:
> MODE MAINTAIN SETPOINT=50C DEADBAND=2C

Notably, the above command includes multiple variables. Under the traditional register map approach, the management system 20 would need to determine which registers for a particular EHT controller 18 are applicable to achieve this command, of which there would be multiple, create a Modbus packet including a write function to such registers, and send the Modbus packet on the wire 22. The above command, however, at such a high abstraction level, can replace those Modbus register-level operations, and the edge module 300 then takes on the responsibility of mapping the high-level command to create a Modbus packet including the write function to particular registers, and sends that to the connected device 18, 19 via the dedicated short link 22A. Accordingly, the edge module 300 does not merely relay low level register reads and writes between the management system 20 and the device 18, 19, but rather, abstracts the interface between the device 18, 19 and the management system 20 by translating between high-level Modbus commands and low-level Modbus register instructions.

Additionally, such high-level commands from the management system 20 can be easy for humans to interpret, both due to their higher level but also since it would not be necessary to constantly refer to Modbus maps of different devices to infer intent and consequence. Furthermore, due to the high abstraction level, text files could be used to script compound operations, lending to the ability for enhanced automation.

These high-level commands can result in a major reduction in traffic along the wire 22 compared to register map approaches. For example, the same command could work across all EHT controllers 18, including those capable of using the command/response protocol and those connected through edge modules 300. Indeed, multiple devices 18, 19, 300 (and multiple EHT channels within each device) could be addressed by a single command using lists or bitmasks (e.g., the same command to be applied to multiple channels as indicated in a masked subset or list), resulting in potentially multiple orders of magnitude savings in wire traffic. Furthermore, the management system 20 no longer needs to track which firmware version is running on what device 18, 19, massively simplifying management system code and, further, firmware updates to an EHT controller 18 would not generally require updates to the management system 20. Rather, such updates would only need to be maintained and monitored by the edge module 300.

Additionally, the command operation can be executed atomically from both the edge module 300 and management system's perspective. More specifically, by way of example, the edge module 300 can receive a single command that may incorporate changes to multiple registers of the EHT controller 18, as discussed above, and can interpret it and communicate with the EHT controller 18 to execute all necessary functions within the command locally. Only when the full command has been executed would a response be provided back to the management system 20. This is in contrast to a register-by-register execution from traditional Modbus packets.

Accordingly, the management system 20 can generate a command in the command buffer 602 (e.g., a multi-register write function to the registers of the command buffer 602) and send the command over the RS-485 line 22 (or via a wireless Modbus protocol). A receiving edge module 300 can receive the command and can include its own API stored in the microcontroller memory configured to process the command and act accordingly with its connected device 18. Further, the API of the edge module 300 can compose a response in the response buffer 604 for a return message to be retrieved by the management system 20. The management system 20 can read the contents of the response buffer 604 via a block read function to the registers of the response buffer 604. For some commands, the response can be a one-byte acknowledgement of success or error when processing the command. For others, the response can also include data. By way of example, if the management system 20 is querying the instantaneous current flowing through a particular EHT channel, the command and resulting response may look like the following:
> CURRENT CHANNEL=7
< OK CURRENT=27

More specifically, the first line above is a command querying the current on EHT channel 7. This command can be communicated to the EHT controller 18, via the edge module 300, over the line 22 as a multi-register write into the registers associated with the command buffer 602. The edge module 300 can interpret the command from the command buffer 602 to query the particular channel of interest from the EHT controller 18 (e.g., without the command from the management system 20 needing to indicate the specific Modbus register of the EHT controller 18 associated with that particular channel). The second line is a response acknowledging the command and returning the current as 27 amps. That is, the edge module 300 can obtain the current from the particular channel of the EHT controller 18 (e.g., through a traditional Modbus register-map approach), and write a response in its response buffer 604 acknowledging the command and providing specific response data, which can be communicated back to the management system 20 through a multi-register read of the registers associated with the response buffer 604.

Furthermore, some embodiments can implement tokenization to further simplify commands and responses. More specifically, keywords can be mapped to and from single- or multi-byte representations, and numeric values can be represented in binary form. However, for some commands/responses, text strings can still be spelled out character-by-character (e.g., when setting a remote device name). Accordingly, each device 18, 19, 300 and the management system 20 can store such keywords in memory for tokenizing messages.

By way of example, using the above command, CURRENT CHANNEL=7 could collapse to two bytes, { 0x14, 0x07 }, where 0x14 is a preset operation code for "read channel current," and 0x07 is the argument (i.e., channel 7). The response could also be two bytes, such as { 0x00, 0x1B }, where 0x00 is an "OK" error return code, and 0x1B is the data requested. As a more complicated example (e.g., more complicated from a register map command level), the following command could be encoded to just four bytes:
> MODE MAINTAIN SETPOINT=50C DEADBAND=2C CHANNELS=0x3F

For example, the first byte can provide the operation code (e.g., for "set mode maintain") and the second, third, and fourth bytes are related arguments (e.g., providing the setpoint magnitude, the deadband, and the applicable channels (e.g., via a channel mask)). Those four bytes could displace a great many raw register level writes, since the above command affects many channels simultaneously, as indicated by the channel bit mask (CHANNELS=0x3F), and changing thermostat modes could involve numerous setting changes for each of those channels. Additionally, during the execution of such commands, the command/response model can give the microcontroller 410 the opportunity to validate and check the requested internal configuration. In the traditional register-map approach, this type of validation is not available as the EHT controller 18 only acts on individual registers as indicated by its master (i.e., the management system 20). However, under the command/response approach, for example, the edge module 300 has the ability to understand the entire command (e.g., the purpose of the command) and can validate that the entire command has been executed accordingly.

The internal structure and formatting of the command set and corresponding responses may be open-ended and developed on an application-by-application basis in some cases. However, in some implementations, the commands can take the form of operation codes optionally followed by fixed format parameters, the offset and correct interpretation and type (e.g., integer, floating point value, character etc.) of which can be unambiguously deduced just from the operation code. In this way, no syntactic parsing is necessary, keeping the computational overhead and error cases minimal at both the management system 20 and the devices 18, 19, 300.

Using such tokenization, the software burden for both composing and interpreting commands or responses would be very low. Although the devices would "talk" in binary, commands could be composed from, and responses rendered back into, ASCII or structured markup languages for the purposes of simplifying coding and human-interpretation of supervisor/controller traffic. Additionally, in some implementations, formats such as XML or JSON could be applied as an alternative human and machine readable form.

Additionally, in some embodiments, the command and response payloads can be cryptographical protected, e.g., via cipher text. For example, through standards-based key exchange and cryptographic protocols, the payload can be protected and, also, the sender and receiver identities can be authenticated in a secure way for each command/response exchange.

Accordingly, FIG. 7 illustrates an example Modbus packet 700 format according to some embodiments. As shown in FIG. 7, a Modbus packet 700 can include a Modbus header 702 and a payload 704. The Modbus header 702 can include the corresponding device address, function code indicating transaction type (e.g., multi-register read or write), CRC (cyclic redundancy check), register addresses identifying the command buffer or the response buffer, and/or other fields. The payload 704 can be what is provided as the multi-register read/write instruction to the command buffer 602 and/or response buffer 604, i.e., encapsulating the command buffer 602 or the response buffer 604. More specifically, the payload 704 can include an encrypted payload portion 706, e.g., including tokenized operation code 708 and one or more corresponding arguments 710, as described above. The payload 704 can also include a length field (LEN) 712, a version field (VER) 714 (e.g., indicating API protocol version), and an optional Forward Error Correction (FEC) 716.

By way of example, a third-party device snooping all Modbus traffic along the bus 22 would see that, instead of the former pattern of register reads and writes scattered across the hundreds of addresses currently used to configure, monitor and control each device 18, 19, the Modbus packets 700 would now be multi-register accesses, and always to the same location (e.g., the registers associated with the command buffer 602 or the response buffer 604). Aside from the length field and version field that may fall outside of the encrypted region, the FEC field 716 (as further described below) and the encrypted payloads 706 would look like white noise. Indeed, repeated identical operations to the same device 18, 19, 300 would effectively never generate the same packet 700 twice. Additionally, in some implementations, all Modbus payloads 706 can conform to a standard length, eliminating the need for the length field 712. Using this encryption method would make it difficult for a third party to reverse engineer how to interoperate with a corresponding device 18, 19, 300 just by watching the traffic along the line 22.

Referring still to FIG. 7, in some implementations, the Forward Error Correction (FEC) field 716 can be implemented to partially mitigate against poor line conditions. For each chunk of data to be sent, additional data is calculated and sent alongside it inside the packet 700. The FEC data can be used to reliably detect whether a communication error has occurred during transmission and, for damaged data fields, possibly enable a repair to the data in place. For example, the amount of damage the packet 700 can sustain and still be repaired can be configurable, with the trade-off being that more damage resilience would result in larger FEC fields 716.

Modbus packets 700 can natively include a Cyclic Redundancy Check (CRC) field (e.g., with the Modbus header 702 in FIG. 4), designed to allow the receiver to determine if a recently arrived packet 700 has suffered any data corruption. Currently, in the event of a CRC fail, the target device 18, 19, 300 is simply required to ignore the damaged packet 700. There is no negative acknowledge (NACK) signal back to the initiator. This uncertainty complicates the communication process, and timeouts followed by retries are generally used to detect and correct such issues. To help mitigate such issues, long multi-read packets can be broken up into smaller chunks which, statistically, have a better chance of getting through. However, this solution can waste bandwidth and complicate the process for both ends. On the other hand, error correction may not be necessary, for example, on lines with good signal quality or for small packets where only a few bytes of payload are involved. In these situations, the additional FEC data only serves to lengthen the packet 700.

Accordingly, in some implementations, the FEC field 716 can be optional and added as needed during system operation. For example, by adjusting the packet version byte 714, the management system 20 can indicate whether part of the payload is a FEC field 716. This gives the option to have the management system 20 start with no FEC (thus, smaller packets and higher performance) and dynamically apply progressively stronger FEC support until communication problems are controlled. In noisy environments, this can lower packet loss and increase aggregate throughput performance. Accordingly, sub-fields in the packet version field 714n can indicate not only protocol version, but also what FEC (if any) was used in the payload encoding.

Furthermore, in some embodiments, an optional set of "public" register address regions can be implemented. That is, in addition to the command and response buffers 602, 604 described above, which may be written to and read from, respectively, via encrypted payloads, a public register space (e.g., a "public buffer") may be designated for conventional Modbus register accesses that would be accessible without requiring encryption. Such instances where public regions may be accessed may be, for example, reading emergency alarm flags or read-only requests for benign status information (e.g., on/off statuses, etc.).

While Modbus is primarily a wired protocol, as noted above, the devices 18, 19, 300 and the management system 20 can communicate via wireless communication methods 23, such a through Wi-Fi (e.g., local area networks, mesh Wi-Fi networks, wide area networks, etc.), Wi-SUN, Bluetooth^{®}, Zigbee, or other methods. The command/response protocol herein can thus be considered a protocol network transport agnostic scheme. That is, the packets 700 used and described herein can be delivered along the line 22 or via wireless communication 23. Thus, any discussion herein of packets 700 or other aspects of the command/response protocol being transmitted along the wired line 22 can equally apply to wireless transmissions.

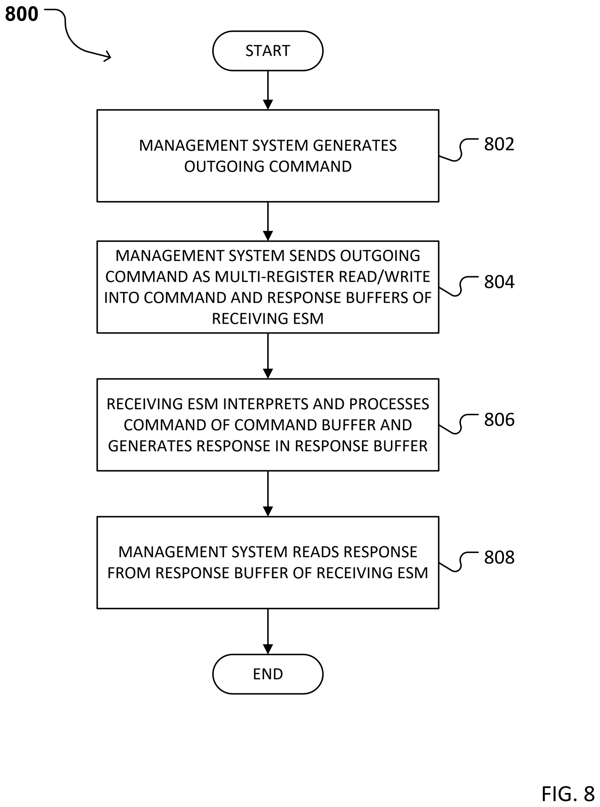

In light of the above, FIG. 8 illustrates an example method 800 of a command/response protocol according to some embodiments. The steps of the method 800 can be carried out by the management system 20 or the edge module 300, as indicated below. Additionally, any or all of these steps can be stored as computer readable instructions on a memory of the corresponding device, such as part of an API or other program instructions. Furthermore, while the steps are illustrated and described in a particular order, in some implementations, certain steps may be executed concurrently or in a different order than what is shown.

As shown in FIG. 8, generally, the method 800 can include the management system 20 generating an outgoing command (step 802) and sending the outgoing command as a Modbus packet 700 comprising a multi-register read/write, writing into a command buffer 602, and reading from a response buffer 604 of a receiving device, such as an edge module 300 (step 804). The receiving edge module 300 can interpret and process the command and write a response into the response buffer 604 (step 806). The management system 20 can then read the contents of the response buffer 604 (step 808).

More specifically, at step 802, the management system 20 can generate an outgoing command. The command can correspond to a request for a particular device 18, 19, 300 to perform an action. For example, the command can be a request for information from a particular device 18, 19, 300, a configuration change for a particular device 18, 19, 300, etc. Alternatively, the command can be a broadcast to all devices 18, 19, 300 on the line 22, requesting all devices 18, 19 to perform an action. Such commands can be automatically generated from a scheduler and/or can be generated in response to user input via the user interface 38 or remote device 24.

At step 804, the management system 20 can send the outgoing command, via the bus 22, as a Modbus packet 700 comprising a multi-register ("block") read/write, e.g., a write into a command buffer 602 of a receiving device 18, 19, 300 (or all devices 18, 19, 300 for a broadcast), as well as a read from the response buffer 604 of the device 18, 19, 300. That is, as described above and illustrated in FIG. 7, the Modbus packet 700 can include a Modbus header 702 with the target device information, a Modbus payload 704 including a length field 712, a version field 714, an optional forward error correction field 716, and an encrypted payload portion 706 including an operation code 708 and one or more arguments 710. Additionally, as discussed above, the operation code 708 and/or arguments 710 may be text strings or may be tokenized, e.g., by mapping keywords of the request to single byte tokens. Notably, because the command is a high-level command rather than a register map-based command that must be specific to the receiving device, the same command can be used across all devices 18, 19, 300 in the system 10. And local firmware in the devices 18, 19, 300 can variously interpret a common command set according to their local architectures. Furthermore, as noted above, in some embodiments, the management system 20 can encrypt some or all of the contents of the payload 706 (e.g., including the block write command and the block read command) into ciphertext.

At step 806, a receiving edge module 300 can receive the Modbus packet 700 on the bus 22, write to its command buffer 602 and, in turn, interpret and process the command from the command buffer 602. For example, the receiving edge module 300 can update thresholds or other configuration parameters, turn on/off specific coils, obtain relevant status values or other information, etc. of the device 18, 19 connected to the edge module 300. Such changes may affect multiple registers of the connected device 18, 19 not specifically identified by the management system 20 or the command, but mapped by the edge module 300 based on the command and communicated to the device 18, 19 via traditional Modbus register read/writes over the dedicated link 22A. That is, the microcontroller 410 of the edge module 300 can execute instructions in memory to interpret and process the command by mapping the request to specific registers of the connected device 18, 19 to carry out actions on those registers (e.g., through another Modbus packet sent to the device 18, 19 with corresponding reads/writes to the mapped registers). Such processing and interpretation can further include, for example, mapping single byte tokens within the data within the command buffer 602 to keywords associated with the request (e.g., stored in memory), reading a macro in the command, and obtaining, from memory, a list of requests associated with the macro to perform multiple actions, among other processing actions. The microcontroller 410 may also decrypt the payload 704 from ciphertext into plaintext as part of this processing.

Furthermore, at step 806, the receiving edge module 300 can generate a response. As described above, in some situations, a response may be a simple acknowledgement of the command (e.g., indicating success or error when processing the command). In other situations, the response may include an acknowledgement of the command and/or requested information, such as requested status values, alarm flags, etc. Data associated with the response can be generated within (e.g., written into) the response buffer 604 of the edge module 300. In some embodiments, the generated response to the management system 20 can be encrypted, as described above.

At step 808, the management system 20 can receive the response by reading the contents of the response buffer 604, as part of the read/write command discussed above in step 804, and process the contents of the response buffer 604 to obtain the requested data.

In some embodiments, the method 800 of FIG. 8 can instead be split into separate write and read steps. That is, the management system 20 can generate an outgoing command as a multi-register write into the command buffer 602, the receiving edge module 300 can interpret the command and generate a response in its response buffer 604. The management system 20 can then generate another command as multi-register read from the response buffer 604 of the edge module 300. Additionally, while steps 804-808 are discussed above with respect to the edge module 300 performing actions, other devices 18, 19 along the line 22 capable of communicating via the command/response protocol can similarly perform such actions.

Referring back to FIGS. 2 and 3, a system 10 can include many EHT controllers 18 and/or other devices 19, 300 in communication with the management system 20 over a shared connection 22. With traditional Modbus communication, there is no command queue. For example, the bus 22 would be fully occupied during outgoing command packet transmission, the turn-around response time of the target device 18, 19, 300, and the incoming response transmission. This can take a considerable amount of time, which is dead time as far as all other devices 18, 19, 300 are concerned. According to some embodiments, an asynchronous communications method can be provided to allow many devices 18, 19, 300 to concurrently process (temporarily overlapping) command/response transactions.

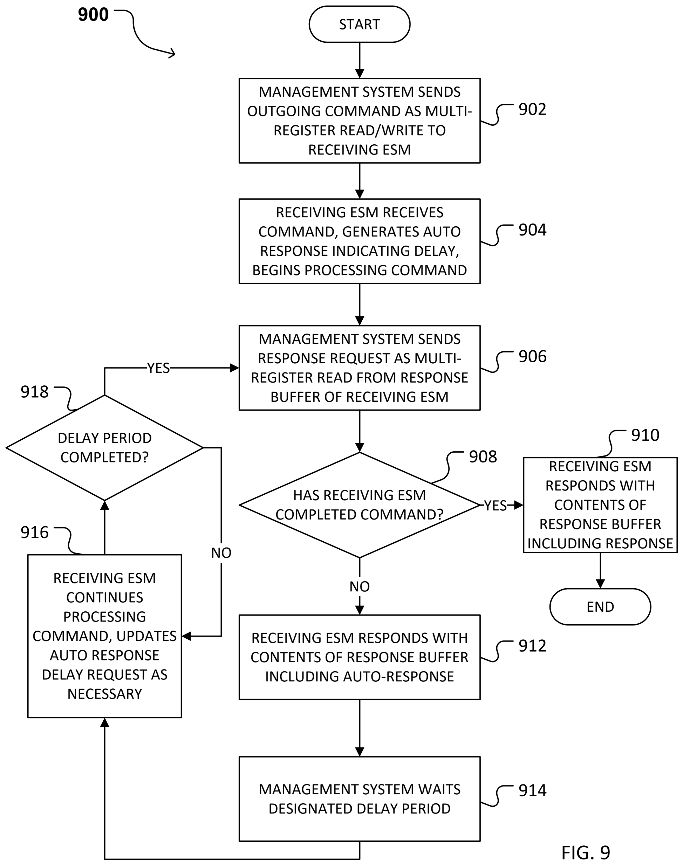

More specifically, FIG. 9 illustrates an asynchronous communications method 900 according to some embodiments. Additionally, any or all of these steps can be stored as computer readable instructions on a memory of the corresponding device, such as part of an API or other program instructions. Furthermore, while the steps are illustrated and described in a particular order, in some implementations, certain steps may be executed concurrently or in a different order than what is shown.

As shown in FIG. 9, generally, the method 900 can include the management system 20 sending an outgoing multi-register read/write command as a Modbus packet 700 comprising a multi-register write into a command buffer 602 of a receiving device 18, 19, 300 and a multi-register read from a response buffer 604 of the receiving device 18, 19, 300 (step 902). A receiving edge module 300 can receive the command, begin processing the command, and generate an automated response in its response buffer 604 that the response is not immediately available, with a suggested delay before retrying (step 904). Following this delay, the management system 20 can send a second outgoing command as a Modbus packet 700 comprising a multi-register read from the response buffer 604 of the receiving edge module 300 (step 906). If the receiving edge module 300 has completed the initial command (i.e., "YES" at step 908), the receiving edge module 300 responds to the second command with a response from the response buffer 604 containing the requested data and/or acknowledging the initial command (step 910). If the receiving edge module 300 has not completed the initial command (i.e., "NO" at step 908), the receiving edge module 300 responds to the second command with a response from the response buffer 604 containing the automated response with the designated delay (step 912). The management system 20 then waits the designated delay time (step 914) while the receiving edge module 300 continues processing the command and, optionally, determines an updated delay time in the automated response to be added to the response buffer 604 (step 916). If the original delay time has expired (i.e., "YES" at step 918), the management system 20 reverts back to step 906 and again sends a response request command.

More specifically, at step 902, management system 20 can send an outgoing command as a Modbus packet 700 comprising a multi-register read/write command, with a command written into a command buffer 602 of a receiving device 18, 19, 300 and a read from the response buffer 604 of the receiving device 18, 19, 300. This may be similar to steps 802 and 804 described above with respect to the method 800 of FIG. 8.

At step 904, a receiving edge module 300 can receive the command, begin processing the command, and generate an automated response in its response buffer 604 that the response is not immediately available, with a suggested delay before retrying, which can be read by the management system 20. For example, at the moment the receiving edge module 300 receives the incoming command, its response buffer 604 can already be pre-loaded with a short message indicating that the response will not be available immediately, and includes a suggested default delay before retrying. The receiving edge module 300 also immediately busies itself with processing the command. Additionally, if the receiving edge module 300 can determine an estimated processing time that is significantly different from the default delay in the pre-loaded response, the receiving edge module 300 can optionally refine the estimate in the response buffer 604.

At this same time, the receiving edge module 300 can begin preparing a response message to be sent via the response buffer 604. That is, during this time, the receiving edge module 300 may be mapping the command to registers of its connected device 18, 19 and sending its own commands to the connected device 18, 19 to obtain requested data or direct certain actions. In some implementations, such changes to the response buffer 604 of the edge module 300 can be achieved atomically using double buffering, e.g., so a receiving edge module 300 is never caught mid-edit of the response buffer 604. More specifically, the receiving edge module 300 can include a first "active" response buffer 604 with the automated response while it prepares a second "inactive" response buffer 604 with the requested response. When the requested response is completed, the receiving edge module 300 can make that second, inactive response buffer the "active" response buffer 604, while inactivating the response buffer 604 with the automated response. Thus, when the command has been fully processed, the response buffer 604 is appropriately prepared for the management system 20.

Referring still to FIG. 9, at step 906, the management system 20 can send a second outgoing command as a Modbus packet 700 comprising a multi-register read from the response buffer 604 of the receiving device 18, 19, 300. In some instances, the management system 20 can send the second outgoing "read" command immediately after the first outgoing "read/write" command in step 902. In other instances, the management system 20 can send the second outgoing "read" command after a delay from the first outgoing "read/write" command in step 902, e.g., based on a delay indicated in the initial response from the edge module 300.

If the receiving edge module 300 has completed the initial command (i.e., "YES" at step 908), the receiving edge module 300 responds to the second command with a response from the response buffer 604 containing the requested data and/or acknowledging the initial command at step 910. That is, the receiving edge module 300 has activated the response buffer 604 with the completed request and can allow the response buffer 604, containing the response to the initial command from step 902, to be read by the management system 20. The communication is then completed as the management system 20 has received the acknowledgement, error message, or requested data in response to the initial command.

On the other hand, if the receiving device 18, 19, 300 has not completed the initial command (i.e., "NO" at step 908), the receiving edge module 300 responds to the second command with a response from the response buffer 604 containing the automated response with the designated delay at step 912. That is, the receiving edge module 300 has activated the response buffer 604 with the automated response, including the default or updated delay time, which can be read by the management system 20.

At step 914, the management system 20 then waits the designated delay time. At step 916, the receiving edge module 300 continues processing the command and, optionally, determines an updated delay time in the automated response to be added to the response buffer 604. At this time, the receiving edge module 300 has still activated the response buffer 604 with the automated response, including the default or updated delay time, until the inactivated response buffer 604 with the actual response is completed.

If the original delay time has expired (i.e., "YES" at step 918), the management system 20 reverts back to step 906 and again sends a response request command as a re-attempt to extract the requested response. The cycle of steps 906, 908, 912, 914, 916, and 918 can be repeated in a loop until the receiving edge module 300 has completed the command (i.e., "YES" at step 908).

Thus, using the above method 900, the management system 20 would either immediately obtain a response from the edge module 300 with the immediate follow up read request, or would receive a message indicating a minimum suggested wait time before the management system 20 should attempt to read the response again. In some implementations, devices 18, 19, 300 can be polled round-robin style to read their status flags to determine if further processing is required. In the asynchronous command response scheme 900 shown in FIG. 9, the management system 20 can have a list of all target devices 18, 19, 300 stored in a table in memory 36. A scheduler of the management system 20 (e.g., executed by the processor 34) can determine which is the next device 18, 19, 300 to be polled, where the table entry for each device 18, 19, 300 can be in one of two states: "command pending" or "no command pending."

Devices 18, 19, 300 with a "command pending" status are not accessed until the time delay indicated in their respective automated response has expired, as there is no value in bothering the device 18, 19, 300 if it is not expected to have completed its command processing. However, devices 18, 19, 300 without a "command pending" status can be polled in a cyclic fashion to check for exogenous events such as, for example, alarm conditions, or to collect routine sensor data for trending. Accordingly, with a suitably crafted scheduler, command responses can be collected shortly after they are available (e.g., after the designated timer expires) and, in the meantime, devices 18, 19, 300 with no pending commands can be polled more frequently than would otherwise have been the case since the "command pending" devices 18, 19, 300 would not participate in the round robin scheduling until their timers expire.

Accordingly, the above method 900 thus allows commands to complete asynchronously and, as a result, the line 22 is available for other device interactions between the command transmission and response reception. Many commands can be in flight at any instant, unlocking the opportunity for parallel processing and potentially significantly reducing the time to overall completion. By way of example, complex compound commands received by a single multi-channel device 18, 19, 300, such as instances where the device 18, 19, 300 needs to be initialized, reconfigured, or receive firmware updates, could take a very long time to process. Using the above method 900, that processing time would no longer be dead time on the line 22 and, further, the management system 20 would not bother the device 18, 19, 300 with an inquiry on its status until the designated delay time has expired. The larger the number of devices 18, 19, 300 in a system 10 sharing a Modbus segment 22 only increase the positive effects of the above methods. As another example, the management system 20 could send a broadcast command to write to the command buffer 602 of all devices 18, 19, 300, and the management system 20 could immediately begin querying each device 18, 19, 300 independently for its response, giving the devices 18, 19, 300 time to generate their responses without tying up the line 22.

As noted above, and referring back to FIG. 6, in some embodiments, devices 18, 19, 300 can include the response buffer 604 comprising a set number of consecutive registers, and the management system 20 can transmit a Modbus packet 700 comprising a multi-register read from the response buffer 604 (i.e., of those corresponding registers) of the receiving device 18, 19, 300. Alternatively, in some embodiments, to further improve communication efficiency, a MODBUS FIFO (first in, first out) read queue function can be used to receive a variable-length vector of register reads up to thirty one registers long.

In some embodiments, to further reduce wire traffic and simplify code from the perspective of the management system 20, embedded macros can be used in the command/response messaging scheme. For example, during operations such as initialization, large-scale configuration changes, and shutdowns, long sequences of operations must be applied to all devices 18, 19, 300 on the bus 22. High level command/response schemes, as described above, can, on their own, significantly reduce the number of transactions required on the wire 22. Additionally using macros could take these numbers down even further by allowing the target devices 18, 19, 300 to store named or numbered command sequences, e.g., downloaded from the management system 20.

By way of example, a simple macro can take the form of a named list of commands that are stored in the memory 26, 414 of the device 18, 19, 300. Once stored in each device 18, 19, 300, special commands from the management system 20 could call them, at which point the device 18, 19, 300 executes the commands and performs corresponding actions, in turn, automatically. Additionally, in some embodiments, in the event that a command generates an error response, execution could be suspended and the response back to the management system 20 could include a record indicating the nature of the error and where it occurred during macro execution. Alternatively, to avoid handling partial execution of a large macro in the event of an error, the macro system of the device 18, 19, 300 could dry-run a macro to completion to check for errors before starting to commit changes. This way, the error would be flagged before any changes had been attempted. Furthermore, in some applications, an initial response from a device 18, 19, 300 can provide a checksum or hashed signature to confirm that the device 18, 19, 300 and the management system 20 have the same macro stored. Such additional exchange would prevent execution of macros that have been changed on one side.

In some applications, the management system 20 can use a macro command to supply input parameters adapted for different situations. For example, a macro 'setpoint' could set up all EHT channels with a particular thermal set point passed as a command parameter when the macro is invoked. That is, the command includes the macro along with the set point parameter. As another example, the management system 20 can use a macro command to upload preset system states, allowing entire compound device 18, 19 (e.g., multiple channels on the device 18, 19, or multiple sets of channels) to be switched to a new pre-recorded preset configuration state with a single command from the management system 20. In view of these examples, not only could macros further reduce the number of transactions on the wire 22, using macros could also reduce the size of such transactions.

Additional examples of Modbus command/response protocol interactions and processes are described in United States Patent Application No. 19/2716,612 filed on July 8, 2025, the entire contents of which is incorporated herein by reference.

In light of the above, a secure, high-level command based protocol is provided to overcome several important limitations of traditional one-register-at-a-time control of remote devices such as industrial controls. Edge modules 300 can be attached to legacy or third-party devices 18, 19, allowing such devices 18, 19 to present regularized interfaces to a management system 20, drastically simplifying the control of thousands of such devices 18, 19 of different varieties across an industrial complex. That is, the edge modules 300, according to some embodiments, provide a way to recruit all existing installed controllers 18 into a cybersecure solution for a management system 20 of an industrial system 10. The existing devices 18, 19 can be left in place and, with a few minutes of re-wiring their Modbus interfaces via dedicated links 22A to edge modules 300, are enhanced to allow them to participate in command/response-based connections with all the associated advantages (e.g., authentication, encryption, wireline efficiency, tolerance of degraded signals, simplified commands, atomic transactions, transaction validation, intelligible high-level logging, imperviousness to competitor snooping and unauthorized interoperation, etc.), all while retaining compatibility with legacy Modbus traffic on the same bus 22. Edge modules 300 thus provide a low-cost alternative to greatly enhancing industrial systems 10 without requiring full reconstructions and controller replacements.

Furthermore, once it is understood how to operate third-party controllers 18 at the Modbus register level, firmware modules for an edge module 300 can be written, allowing these third-party controllers 18 to also be seamlessly integrated into a system 10 without the management system 20 needing to be aware of the nature of the third-party controller 18 abstracted behind its edge module 300. This could take the utility of third-party products to higher levels by offering cybersecurity that is not natively offered by the third parties themselves.

Accordingly, edge modules 300 can receive commands from the management system 20 via the command/response protocol, interpret the commands, and control their connected device(s) 18, 19 accordingly. In some embodiments, edge modules 300 can enable two distinct operational modes: translate mode and override mode. In translate mode, the edge module 300 receives the high-level commands from the management system 20, as described above, and interprets them in the context of the connected device 18, 19. The edge module 300 translates these commands into appropriate configuration changes for the connected device 18, 19, which continues to operate autonomously using its own executive control functions. That is, the connected device 18, 19 maintains its independent decision-making capabilities and behaviors based on the configuration parameters communicated by the edge module 300. In override mode, the edge module 300 assumes the executive function of the connected device 18, 19, which is reduced to a collection of non-executive low-level functions. The edge module 300 directly accesses and manipulates the core low-level features of the connected device 18, 19 and proceeds to directly honor command/response commands by assuming the role of the underlying controller hardware.

More specifically, in translate mode, the edge module 300 receives high level commands from its upstream port 404 and interprets them in the context of its host device 18, 19. The downstream link 406 is then used to configure the host device 18, 19 to reflect the requirements of the received commands. For example in the case of an EHT controller 18 as a host, a command might be sent by the management system 20 to select a "Freeze Protect" mode, under which the associated heat trace cable 14 will be energized in such a way as to prevent the thermal load (e.g., surface 12 in FIG. 1) from every approaching a freeze point. The edge module 300 translates from a high level command domain to the local idiosyncrasies of the host device 18, i.e., by writing commands to specific device registers so that the EHT controller 18 executes this functionality. This can be beneficial because it allows a great many different host devices 18, 19 to be controlled in an identical manner, simplifying many aspects of the management system 20 and the interpretation of the system's state by operators.

In contrast, in override mode, the edge module 300 can assume the executive function of the host device 18, which is now reduced to a collection of non-executive low-level functions. For example, a basic EHT controller 18 can comprise RTDs (temperature sensors), CTs (load and ground fault current sensors), and relay drivers to modulate heating current. The edge module 300 can determine how to directly access and manipulate these core low-level features through Modbus-register commands via its downstream link 22A and proceeds to directly honor the command/response commands assuming the role of the underlying controller hardware (i.e., taking over the controller logic for these core functions). When sensors and actuators need to be accessed, the edge module 300 simply uses its downstream link 22A to the subservient host 18, 19, for example in the case of Modbus by reading or writing appropriate function-specific control registers.

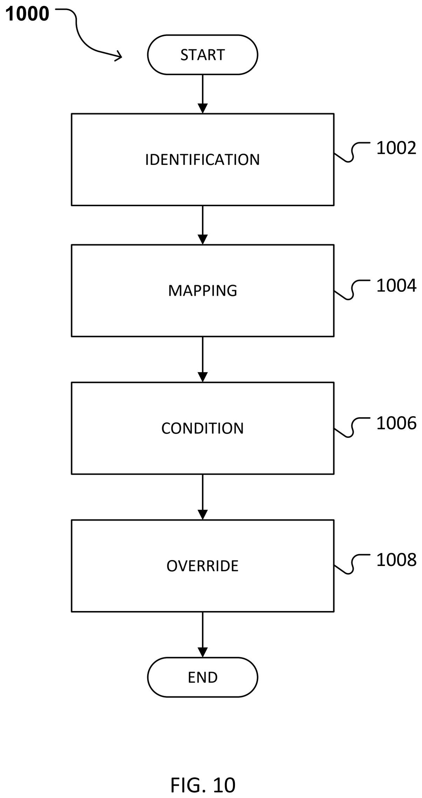

An example process 1000 of overriding a host device 18, 19 is illustrated in FIG. 10. As shown in FIG. 10, the process 1000 can include four steps: an identification step 1002, a mapping step 1004, a condition step 1006, and an override step 1008.

For example, in the identification step 1002, the edge module 300 can identify the type of host device 18, 19 it is attached to by probing the host device 18, 19 via its downstream port 406. This identification can be performed by matching device resources with a database of signatures from known devices (e.g., stored in memory 414 of the edge module 300). The edge module 300 can interrogate the host device 18, 19 (e.g., through specific Modbus register reads) to determine its vendor, model, firmware version, and other identifying characteristics that allow the edge module 300 to properly interface with the specific device type.

In the mapping step 1004, using the device identification information from step 1002, the edge module 300 can consult another internal database in memory 414 to identify the quantity, type, and location of each resource (e.g., RTD, CT, relay) to be used. For example, in the case of a Modbus-based host device 18, 19, this involves determining the Modbus register addresses of each resource and mapping them to internal variables so those resources can be accessed during override operations. This mapping process involves both establishing where to access particular control points and how to configure or interpret them. For example, in the case of an EHT controller 18, the representation format for a temperature may depend on the particular register in question, including variations in units (Celsius, Fahrenheit, Kelvin), data types (floating point, integer, fixed point), data width, and other formatting considerations.

In the conditioning step 1006, before override can commence, the host device 18, 19 can be conditioned so that it will be passive and not independently make decisions or take actions without requests from the edge module 300. For example, displays, radios, and other peripherals of the device 18, 19 can be disabled or quiesced, and automatic control modes can be deselected. As an example, in the case of an EHT thermostat controller 18, the output states for any power relays can be configured to manual ON/OFF mode, if available. If such a mode is not available, then the same effect can be achieved by establishing a temperature maintain regulatory mode and instead effecting ON/OFF control by varying the commanded set point to either at or below the minimum value (forcing the relay ON), or at or above the maximum value (forcing the relay OFF).

In the override step 1008, the edge module 300 becomes the only executive agent, using the passivated host device 18, 19 to indirectly read sensor values and set actuation values. During this override operation, the edge module 300 assumes the role of the underlying controller hardware and directly honors command/response commands by accessing and manipulating the core low-level features of the host device 18, 19, such as effecting ON/OFF control of associated relays. In other words, the edge module 300 implements its own control algorithms (like thermostat logic) while using the host device's hardware resources. The host device 18, 19 is effectively reduced to a collection of non-executive low-level functions that respond to commands from the edge module 300.

In some examples, the override mode can offer a lower risk and simpler path for harnessing alien controllers. More specifically, to function in translation mode is to fully understand the operation of the host device 18, 19 as expressed through its low level API (generally Modbus register map in the case of EHT controllers 18). This can result in a complex software driver for each specific variety of host controller 18, increasing development time and also implementation risk. In override mode, most of the edge module 300 standard controller logic is invariant across the entire variety of possible host controllers 18. The degree to which the controller's API needs to be understood is limited to the minimum required to perform steps 1002-1006 as described above. As a result, it is much faster to assimilate a new host controller 18, and much lower risk in operation.

In addition to the above-described translation and override services of edge modules 300, in some embodiments, edge modules 300 can further be configured to exploit their privileged location adjacent to devices 18, 19 to perform additional services, such as high-fidelity logging and edge analytics functions, bringing extra functionality despite still working across low data rate and often unreliable installed cable infrastructure. More specifically, in some embodiments, the edge module 300 can include a relatively generous flash storage 214 to allow the edge module 300 to cache high-frequency and fidelity logging and telemetry essentially at the device 18, 19 (e.g., at the "edge" in the field adjacent to the device 18, 19 rather than remotely at the management system 20). Furthermore, the edge module 300 can interact with its companion device 18, 19 much more intensively than, for example, the management system 20 would generally see sharing a bus 22 with many other devices 18, 19.

For example, during failure events of any kind, it can be valuable to be able to access detailed log records of device parameters, behavior, and diagnostics. However, the logging capabilities of many existing EHT controllers 18 are often very limited. For example, some older EHT controllers 18 do not have sufficient flash storage devices. Also, the low reliability and data rate of upstream connections (e.g., along line 22), along with the shared nature of the RS-485 bus 22, often means that it is not feasible to continuously stream detailed log information for collection at the management system 20.

Even though the above-described command/response protocol can maximize the utility of the RS-485 link 22, the line 22 is fundamentally no faster or less-shared than before, so continuous upstream logging is still usually not a viable option. According to some embodiments, however, the edge module 300 can pump its companion device 18, 19 for telemetry very aggressively, since it can write time-stamped records into its own very large flash memory 214. For example, with a 64-GByte flash memory 214, a continuous 9600 baud logging stream would not start to overwrite the first entries for two years. In practice, actual log production rates may be very much lower than the 9600 baud hard ceiling (i.e., the limit of the downstream RS-485 port), so 64 GBytes may be enough for an entire device lifetime's worth of logging information. Additionally, since flash cells used for such logging can effectively be write-once, considerations such as wear levelling would not apply and the storage system 214 would be reliable and long-lived.

In some embodiments, in the event of a system failure or upset, the management system 20 can interrogate all involved edge modules 300, recover the relevant portion of their local log databases (e.g., between appropriate timestamp brackets), and reconstruct a detailed, time-indexed, multi-channel picture of what happened and in what order. This can greatly facilitate remote trouble-shooting and debugging and could also form the backbone of lifetime trending information. Local free running clocks can be used for high temporal resolution timestamping of log entries within each edge module 300. Additionally, periodic broadcast "tick" commands from the management system 20 would be near-simultaneously registered into the logs of all edge modules 300 to allow subsequent time-registration of many parallel log sequences.

Furthermore, this on-board archive of logging information on edge modules 300 may be attractive to customers not wishing to leak operational details off-site. For example, the system 10 can be set up so that such data would never routinely leave the edge modules 300 and could only be extracted under extraordinary circumstances.

Additionally, it is much more efficient to perform many types of data analytics as close to the data as possible. Since the edge module 300 is capable of storing large amounts of data from its high-frequency logging, as discussed above, the microcontroller 410 is therefore well-placed to perform this work. For example, in some embodiments, the management system 20 can send a command to the edge module 300 to instruct the edge module 300 to perform searches, statistical analysis, and/or general computations such as signal processing, Fourier transforms etc. on the data "in place" (i.e., at the device). These "edge" analytics (i.e., analysis essentially at, or adjacent, the device 18, 19), can be valuable because, while much of this low-density data is effectively stranded within the edge module 300, summaries of many analytics functions could be extremely small and easy to share back to the management system 20. For example, calculating a regression (curve-fitting) could be performed in the background locally on an edge module 300 and, while ingesting and processing many gigabytes of data, only a few bytes of data, such as fit coefficients, statistical characterizations, etc., would need to be returned to management system 20. Furthermore, in some embodiments, edge modules 300 can be configured to automatically perform data analytics, e.g., through running programs in the background, such as searching for outliers or anomalous readings to report back to the management system 20.

As another example, in some embodiments, edge modules 300 can be configured to automatically perform data analytics, such as continuous sampling and logging of power and RS-485 signal integrity. For example, industrial equipment is often troubled by power integrity problems, and EHT controllers 18 often see corrupted RS-485 data frames in the field. As these problems are often transient in nature, they can be difficult to prove. However, in some embodiments, the microcontroller 410 of the edge module 300 can include a multiplexed analog-to-digital converter (ADC) function allowing it to digitally sample power and communication lines, including both alternating current (AC) and direct current (DC) lines. The microcontroller 410 can execute continuous digital signal processing (DSP) algorithms to check for power noise, surge, spikes and brownout detection, generating log data and triggering configurable alarms. The microcontroller 410 can also continuously sample from the upstream RS-485 Modbus 22 at high frequency into a cyclic buffer. When the microcontroller 410 detects packet corruption, waveform capture can be temporarily paused while the failing packet trace is analyzed and/or saved for later inspection.

As yet another example, edge modules 300 can be configured to automatically store all Modbus transactions in their memory 214. Such data can later be processed to learn about network activity patterns and traffic generated by all devices 18, 19, 300 on the line 22.

In light of the above, edge modules 300 can be coupled to legacy or third-party devices 18, 19 in an industrial system 10 for, for example, command interpretation (e.g., from a management system 20), downstream device normalization, FEC processing to support poor electrical signaling environments, local logging services to catch massively more data than could be streamed back, and/or integrated analytics functions to process this archived log data in place, allowing much more data to be considered by centralized management systems 20.

In addition to being connected to legacy or third-party devices 18, 19 that were previously connected and communicating with a management system 20 via an RS-485 bus 22, in some embodiments, edge modules 300 can be implemented in a system 10 to provide information to the management system 20 about devices 19 that were previously not in communication with the management system 20. By way of example, many components of an industrial system 10 may not be controlled by an EHT controller 18 or other device 19 in communication with the management system 20. For example, such components may be added to the system 10 and directly controlled via mechanical breakers, relays, thermostats, etc. In this manner, the management system 20 has little visibility into the operation of these components. In some embodiments, an edge module 300 can be coupled to such a component, or device 19, in a manner that allows the edge module 300 to obtain data related to an operation of the device 19, and relay information about the device 19 to the management system 20.

For example, FIG. 11 illustrates another example edge module 300, according to some embodiments. As shown in FIG. 11, the edge module 300 can include a housing 402, an upstream port connection 404, a downstream port connection 406, a power port connection 408, and an internal PCBA 1102, e.g., comprising a microcontroller 410, a power regulator 412, and flash memory 414 as described above with respect to FIG. 4.

Regarding the housing 402, generally, in one example implementation, the edge module 300 can be a small module designed to be mounted on a surface of a junction box, wall-mounted enclosure, or freestanding control panel. As shown in FIG. 11, the housing 402 can comprise a base 1104 (e.g., a stainless steel plate), a threaded neck 1106 extending downward from the base 1104, and a top shell 1108 extending upwardly from the base 1104. For example, installation can involve finding or drilling a small hole (e.g., around 25 mm in one implementation) through a surface 1110 (e.g., wall) of the box, enclosure, or panel. The threaded neck 1106 can extend through the hole and can be secured on the other side via a locking nut 1112. In some implementations, gas seals 1114 can be provided and compressed between the base 1104 and the surface1110 to ensure suitable explosion-prevention, e.g., when deployed in explosive atmosphere environments. For example, the locking nut 1112 can be tightened from the inside to firmly mount the edge module 300 and compress the gas seal 1114. Alternatively, washers and lock washers may be used in place of the locking nut 1112.

Referring still to the housing 402, extending upward from the base 1104, the top shell 1108 can be made of suitable high-impact, UV, and temperature resistant clear plastic. For example, in some embodiments, the top shell 1108 can include optically clear and radio transparent plastic, thick enough to provide suitable dielectric depth for explosive atmosphere (ATEX) approvals. The top shell 1108 can enclose internal components within the housing 402, such as the PCBA 1102 handling all electronics functions, including the microcontroller 410, power regulator 412, and flash memory 414 (not shown in FIG. 11), as well as a wireless communication antenna 1116 and indicator LEDs 1118. In some implementations, the PCBA 1102 may comprise multiple stacked PCBAs, if required by the particular application. Furthermore, wires or connectors can be directly attached to the PCBA 1102. Generally, this electronics region and the threaded neck 1106 can be entirely filled with a potting compound 1120. Further, a hemispherical region 1122 in the upper region of the top shell 1108 may be a void or filled with optically clear potting compound, depending on the application.

In some embodiments, the wireless communication antenna 1116 can be a low gain (near omnidirectional) antenna for the Wi-Fi, Bluetooth, or other radio modules built into the main PCBA 1102. The antenna 1116 can be a printed, metallic or ceramic chip antenna. Additionally, one or more upward firing RGB indicator LEDs 1118 can be used to indicate the state of the connected device 18, 19 (e.g., of the EHT circuit and/or control system). In some embodiments, the indicator LEDs 1118 can be partially encapsulated in the potting compound 1120, with the tops of the indicator LEDs 1118 protruding into the top region 1122. As noted above, the top region 1122 can be optically transparent and light can be designed to partially reflect internally at the interface between the top region 1122 and an inner surface of the top shell 1108 to provide a near sphere coverage profile. Additionally, in some embodiments, a top surface 1130 of the top shell 1108 can be faceted to amplify this effect and control how much light is directed at each subtended elevation angle. In some embodiments, the indicator LEDs 1118 can be the same color, different colors, or individually multicolored to indicate different states and alarms, etc. Furthermore, in some embodiments, the PCBA 1102 can include additional electronics. As one example, the PCBA 1102 can include a resistor (not shown) that can act as an internal heating system, thus keeping the top shell 1108 from icing.

As noted above, the edge module 300 can be installed on the enclosure wall 1110 so that the threaded neck 1106 extends into the panel or enclosure. The edge module 300 can interact with devices inside the host enclosure through cables that either emerge directly from the potting compound 1120 at the end of the threaded neck 1106, or else plug into connectors (not shown) protruding from the potting compound 1120 on an open face of the threaded neck 1106. Either design can present a minimal footprint imposition to the internal equipment in retrofit scenarios. The interacting connections extending from the edge module 300 can include an upstream Modbus link connection 404, a downstream Modbus link connection 406, a power connection 408, current transformer (CT) inputs 1124, RTD inputs 1126, and/or electromechanical relay (EMR) or solid state relay (SSR) output 1128. It should be noted that some implementations of the edge module 300 may not include all of these connections, or may include additional connections.

Regarding the power port 408, in some embodiments, the edge module 300 can parasitize DC or AC power from within the panel, as is most convenient. As noted above, in some implementations, total power draw can be minimal, e.g., up to 2-3 Watts. Additionally, some edge modules 300 may be presented in DC or AC only versions to control complexity and cost for any given installation.

Regarding Modbus interfaces, the edge module 300 can include the upstream and downstream links 404, 406, as described above. That is, an upstream Modbus link 404 can provide a connection to the management system 20 (via bus link 22) to enable command/response communications. The downstream Modbus link 406 can provide a dedicated connection 22A to the device 18, 19 to enable traditional register connections.

Regarding additional inputs and outputs, the CT inputs 1124 can connect the edge module 300 with one or more current transducers, which can measure instantaneous current, such as load or ground leakage current. The RTD inputs 1126 can connect the edge module 300 with one or more RTD sensors, e.g., for measuring load or ambient temperatures. The EMR/SSR drive output 1128 can allow the edge module 300 to directly energize or de-energize connected power or alarm relays. The functionality and benefits of these additional components will now be described with respect to a number of potential use scenarios.

According to a first scenario, an edge module 300 can be used for instrumenting EHT circuits that lack controllers or thermostats. For example, in regions that tend not to experience severe cold weather and/or are simply requiring freeze protection, the many self-regulating (SR) EHT cables are energized directly through a circuit breaker with a manual switch. Such circuits are not associated with any thermostat or controller and there is no means of remotely monitoring the state of the circuit or any fault conditions that may arise. Furthermore, the current consumption of the EHT circuit is not monitored, so it is difficult to detect an aging cable or faulty insulation. Such locations thus are not connected with RS-485 or any other form of wired network.

In this scenario, an edge module 300 can be deployed as a wireless CT/RTD sensor node. The edge module 300 can capture current and voltage readings (via the CT inputs 1124), optionally ambient or topical temperature readings (via the RTD inputs 1126), process, store and interact with a management system 20 via wireless networks (via the wireless antenna 1116) and also flag the circuit state through the indicator LEDs 1118. More specifically, readings can be taken at high frequency and all sampled data written into the capacious internal nonvolatile log memory 414. The management system 20 can interact with the command processor module via Wi-Fi or a Field Area Network (FAN) such as Wi-SUN and recover current temperatures, power levels, ground fault levels and alarm states. The management system 20 may also request that the edge module 300 interrogate its log entries with specified search or analysis criteria.

According to this scenario, a great many uncontrolled EHT circuits deployed in the field can be continuously monitored without the installation of communication wires or new enclosures. Because of the simplicity, low cost, and small footprint, the edge module 300 can readily be retrofit into any existing installation. For example, the edge module 300 can be installed onto existing junction boxes or power boxes of the EHT circuits. Furthermore, according to this scenario, in some applications, the edge module 300 can act as an intelligent lighted end seal, since the LEDs 1118 can now do rather more than simply confirming that the cable is energized. Additionally, using Bluetooth capabilities of the edge module 300, operators can sample circuit states from nearby using a Bluetooth-enabled mobile phone, tablet, or similar remote device, as discussed above. In this mode, the edge module 300 can be entirely passive, providing monitoring services only, while operation of the EHT circuit may be completely unaffected. As a result, there is very low risk of disruption of ongoing operations when retrofitting an edge module 300 into such system. Furthermore, using clamp-style CTs with the edge module 300, existing high-power cabling need not be disturbed to introduce current sensing capabilities for such systems.

According to a second scenario, an edge module 300 can be used for instrumenting existing mechanical thermostats. For example, similar to the above first scenario, a great many installed circuits are controlled by simple mechanical thermostats. Such devices are simple and can be very reliable if a simple and rarely changing thermal regulation is required. However, again, there is no visibility into how the thermostat is performing, nor how the cable and insulation are performing.

In this scenario, an edge module 300 can be deployed to monitor the outputs (e.g., relay commands) of each mechanical thermostat using, e.g., the CT inputs 1124, as current draw would change when the thermostat turns on or off the EHT circuit. As a result, the edge module 300 can bring a non-electronically controlled EHT circuit into scope for a central management system 20, monitoring and its data and history available for analytics services to generate valuable insight into the state of the system 10. Bluetooth access can also provide operator access to such data in the field (e.g., via a remote device 24). Furthermore, the addition of an RTD connected via the RTD inputs 1126 into this configuration can allow the edge module 300 to monitor the performance of the thermostat by tracking the same temperature it is keying from and watching its turn-on, turn-off decisions. In this scenario, the edge module 300 can confirm set points and dead bands, and can generate alarms if the mechanical thermostat and/or cable is found to not be performing as required. Additionally, in some embodiments, the edge module 300 can analyze the RTD inputs 1126 to monitor a state of the cable, allowing for lifetime data analysis and maintenance prediction. Furthermore, as the thermostat can inherit Bluetooth access from the edge module 300, it can be configured and monitored by nearby technicians using a remote device 24.

According to a third scenario, an edge module 300 can be used for instrumenting existing third party ("alien") controllers. Similar to the examples described above, some circuits are managed by electronic controllers 18, but they lack command/response protocol capabilities. As such, an edge module 300 can be deployed to shadow the third party controller's inputs and outputs, bringing this instrumentation back to the management system 20. The edge module 300 thus extends the scope of coverage in an industrial system 10 still further to include circuits managed by alien controllers 18. Performance and malfunctions can be independently flagged and indicated through alarms, Bluetooth interactions can be enabled, and visual LED indicators 1118 can also provide status indications in the field.

The above three scenarios may all look the same in terms of functionality, but are applied to different cases of pre-installed EHT equipment. Collectively, these three scenarios represent the large majority of EHT circuits deployed and thus represent a large multiplier on the amount of available data collection capacity to be available for real-time monitoring and alarms, and longer term analytics functions.

Furthermore, it is expected that there exists a large market for the ability to upgrade EHT circuits in the above three scenarios to a modern, cybersecure electronic control and monitoring solution. By additionally engaging EMR/SSR drive outputs 1128, the ability to drive EMR/SSR switching devices, an edge module 300 can use CT and RTD inputs to function as a fully-fledged, single-channel EHT controller, complete with Wi-Fi, Bluetooth, visual indicators, and advanced logging/edge analytics.

For example, in the case of upgrading existing thermostats or alien controllers, an SSR or EMR may already be in place and the upgrade is a matter of disconnecting the existing thermostat or controller and re-wiring the relay to the edge module 300. In the case of upgrading an existing EHT circuit that lacks controllers or thermostats, an SSR or EMR may need to be installed. Additionally, in such scenarios, the downstream RS-485 Modbus port 406 may not be necessary as there will be no host device 18, 19 to interface with. In some cases, this port 406 may be used to connect with other Modbus equipment, such as RTD multiplexors, or even used to connect with additional edge modules 300 to provide fault tolerant configurations.

Alternatively, in some embodiments, an edge module 300 may not include CT inputs 1124, RTD inputs 1126, and/or EMR/SSR drive output 1128. Rather, these interfaces and capabilities may instead be implemented into a separate "helper module" acting as a controller 18, tailored for the particular control scenario, and connected to the downstream port 406 of the edge module 300. In this manner, the edge module 300 would form the "brain" of the controller 18 (including the domain specific interfaces RTD, CT, etc.), and provide communications interfaces, all business logic, etc. Accordingly, in this scenario, the helper module would still communicate with edge module 300 via a dedicated serial interface, effectively acting a made-for-purpose host device as no existing device previously existed to override in that application.

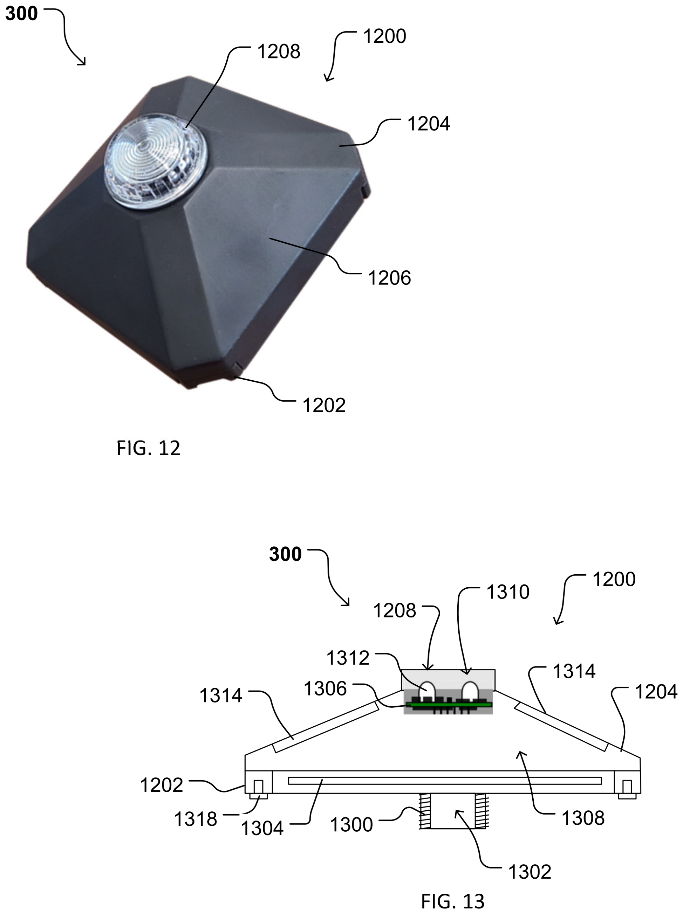

Turning now to FIGS. 12 and 13, another example edge module 300 is illustrated, according to some embodiments. FIG. 12 illustrates a top isometric view and FIG. 13 illustrates a cross-sectional view of the edge module 300. As shown in FIG. 12, the edge module 300 can include a housing 1200 comprising a base 1202 and a top shell 1404 extending upward from the base 1202 (coupled together via, e.g., fasteners 1318, shown in FIG. 13, and a suitable gasket, not shown). The top shell 1404 can comprise a pyramidal structure with multiple broad faces 1406, and a lens 1408 (e.g., a Fresnel lens) is positioned at the apex of the pyramidal top shell 1404. For example, the lens 1408 can be coupled to (e.g., screwed onto) an opening at the apex of the top shell 1404.

As shown in FIG. 12, the base 1202 has a generally octagonal shape with truncated corners, providing a footprint suitable for mounting on standard electrical junction boxes. The overall dimensions of the base 1202 can be configured such that the edge module 300 can be installed directly onto a 100mm x 100mm footprint of the lid of a standard electrical junction box, with the truncated corners providing clearance for corner screws attaching the lid to the junction box. However, other dimensions can be used for other applications. For example, the pyramid housing 1200 can also be installed onto the lids of other controllers 18 or onto the outside of existing equipment panels and enclosures, or any other surface. By being configured for installation outside of enclosures, the housing 1200 can be made of materials and with adequate sealing configured for installation in hazardous locations, such as locations classified as ATEX Zone 1 (e.g., a high risk zone where an explosive atmosphere may occur during normal operations).

As shown in FIG. 13, the edge module 300 can include a threaded neck 1300 extending downward from the base 1202. The threaded neck 1300 allows the edge module 300 to be attached by drilling a suitable hole, inserting the threaded neck 1300 through the hole from the outside, and securing with a locking nut on the inside (similar to the locking nut 1112 discussed above with respect to FIG. 11). The joint can be protected with fitted gaskets to maintain a gas-tight seal across the interface (e.g., similar to gaskets 1114 described above with respect to FIG. 11). Cables for sensors, power, and communications can then be run through a pass-through opening 1302 of the threaded neck 1300 to interface with equipment inside the housing 1200.

Referring still to FIG. 13, the edge module 300 can include two PCBAs positioned within the housing 1200. A first PCBA 1304 is positioned within an internal cavity 1308 adjacent to the base 1202, and an LED PCBA 1306 is positioned above the first PCBA 1304, parallel to and spaced apart from the first PCBA 1304, and adjacent to or within a lens cavity 1310. The first PCBA 1304 can include various electronic components such as, but not limited to, a microcontroller, a power converter (e.g., an AC/DC converter), memory, and/or other electronics (as described above with respect to FIG. 4). In some embodiments, the first PCBA 1304 can also include an accelerometer (not shown). For example, a six-axis accelerometer that can detect rotational and translational vibrations in all three spatial dimensions can allow for the edge module 300 to monitor vibrations in its environment, as changes to vibration patterns can be precursors to failures in the equipment such as motors, pumps, and compressors. Vibrations can also be used to determine if liquid is flowing in pipes and, thus, the accelerometer can be used, at least in part, for flow determinations by the edge module 300 and/or a connected device 18, 19.

Referring still to FIG. 13, the LED PCBA 1306 includes one or more LEDs 1312 mounted thereon, which are positioned to emit light upward through the lens 1408 at the apex of the top shell 1404 (e.g., similar to the indicator LEDs 1118 described above). The lens 1408 and its barrel can be formed as a single piece of high-impact polymer, and the lens cavity 1310 can be filled with an optically transparent gel to prevent air cavities and provide a clear optical path for the LEDs 1312 to the outside. For example, the LED PCBA 1306 can be pushed directly onto the top surface of this gel to meet ATEX Zone 1 requirements. Additionally, the lens 1408 can screw into a female thread at the top of the pyramid shell 1404 along with a suitable gasket (not shown) and is secured with thread locking adhesive for permanent attachment in some embodiments. Furthermore, the remaining internal cavity 1308 can be filled with a potting compound that sets to a rigid state and provides mechanical support while also sealing the internals from the environment and displacing any air pockets.

Additionally, in some embodiments, like the edge module 300 of FIG. 11, the edge module 300 of FIGS. 12 and 13 can include multiple radios. In one embodiment, the edge module 300 can include four radios with different frequencies, using three antennae: a first antenna for a Wi-SUN Field Area Network, a second antenna for Wi-Fi and Bluetooth^{®} low energy (BLE); and a third antenna for a near-field communication (NFC) device. Each of these antenna can be formed from PCB structures 1314 and attached to an interior surface of a respective broad face 1406 of the top shell 1404. The antenna PCB structures 1314 can be optimized to operate while embedded in the potting compound. If the edge module 400 is intended to be located where radio communications are unfavorable due to shadowing from large metallic structures, for example, the edge module 300 can instead be configured without 900MHz and 2.4GHz internal antennae and instead carry their RF connections out through the opening 1302 to reach external antennae that can be located for better radio operations. Such an option could also be used when requiring high gain antennae for longer range point-to-point beams.

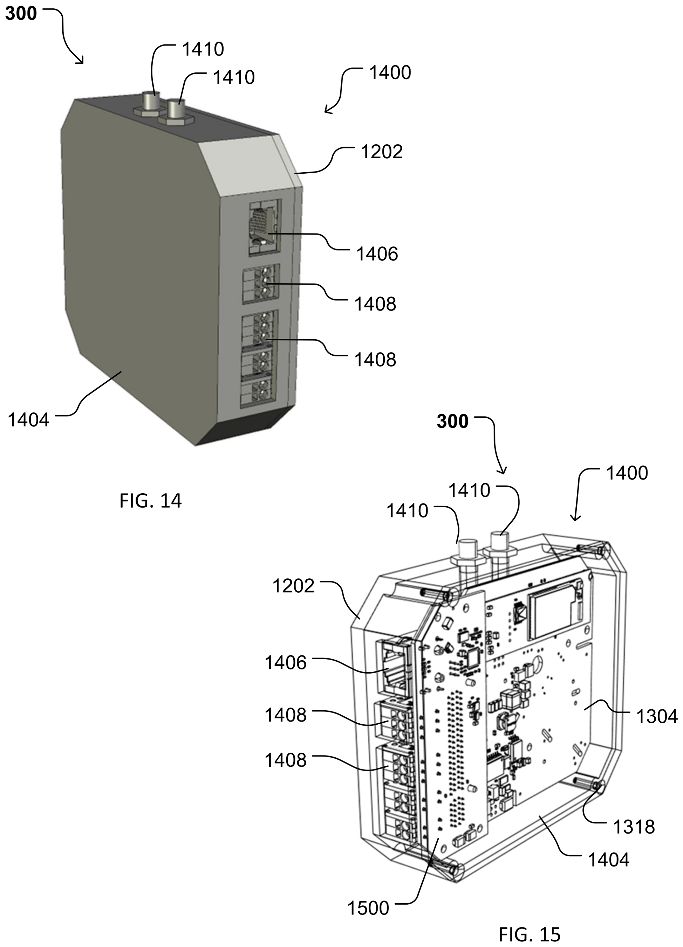

Turning now to FIGS. 14 and 15, another example edge module 300 is illustrated. FIG. 14 illustrates a top isometric view and FIG. 15 illustrates a transparent view of the edge module 300. In some embodiments, while the edge module 300 of FIGS. 12 and 13 may be configured for installation outside enclosures and, thus, explosive atmospheres (ATEX Zone 1 environments), the edge module 300 of FIGS. 14 and 15 may be configured for installation inside enclosures. As the module 300 may be protected from explosive atmospheres by the enclosure it is installed in, its design may instead be adaptable for Zone 2 environments (e.g., where an explosive atmosphere is not likely to occur in normal operation, and if it does occur, it will only exist for a short time). However, the edge module 300 of FIGS. 14 and 15 may include similar components to the edge module 300 of FIGS. 12 and 13 and, thus, like elements are numbered accordingly.

For example, as shown in FIG. 14, the edge module 300 can include a housing 1400 comprising a base 1202 and a top cover 1404 extending upward from the base 1202. The housing 1400 can have a compact, generally octagonal form factor suitable for mounting on standard DIN rails. As such, the top cover 1404 may be substantially flat. An ethernet port 1406 can be positioned on a front face of the housing 1400 to provide communication with a management system 20. Multiple ports 1408 (e.g., similar to the upstream port 404, the downstream port 406, and the power port 408 of FIG. 4) can also be positioned on the front face to provide communication with the management system 20 and connected device(s) 18, 19, respectively, and receive power. One or more radio couplers 1410 can be positioned on another front face (or the same front face) to interface with external radio connections.

As shown in FIG. 15, the edge module 300 can include the first PCBA 1304 positioned within the housing 1400. As described above, the first PCBA 1304 can include various electronic components such as, but not limited to, a microcontroller, a power converter (e.g., a DC:DC converter for a 24 V DC input from within the enclosure), memory, and/or other electronics. The edge module 300 can also include a terminal PCBA 1500 positioned within the housing 1400, which can be used for wire terminations and ethernet connections from the respective ports 1406, 1408. Additionally, in some embodiments, the edge module 300 can include wireless communication capabilities via external connections. For example, Wi-SUN and Wi-Fi/BLE antennae can be connected to the couplers 1410 positioned on the top surface of the housing 1400. The couplers 1410 can be, for example, SMA (SubMiniature version A) couplers or other suitable couplers for radio connections. This configuration can allow for optimal antenna placement when the edge module 300 is installed inside metallic enclosures that might otherwise interfere with radio communications.

Furthermore, in some embodiments, the edge module 300 of FIGS. 14 and 15 can be configured without potting compound, allowing for easier access to internal components when installed in protected environments. Fasteners 1318 can be used to removably couple together the base 1202 and the top cover 1404 while maintaining accessibility. As such, the housing 1400 can be designed to provide adequate protection for the internal components while allowing for maintenance and service access when necessary.

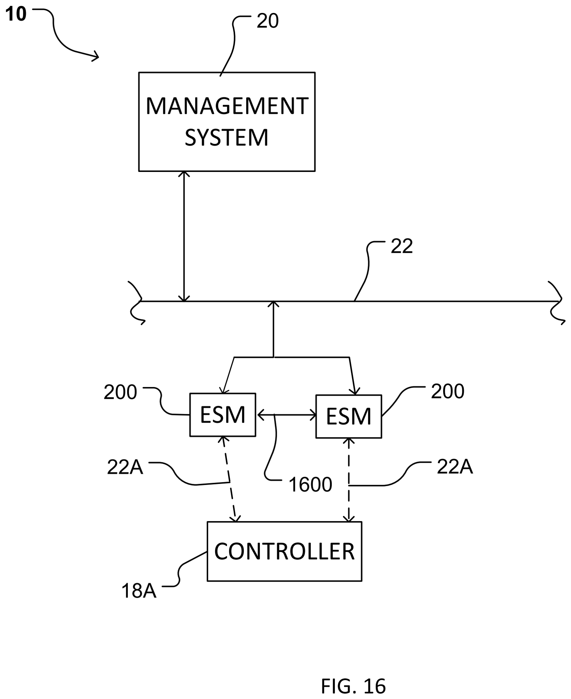

In view of the above, many different form factors and configurations of edge modules 300 can be used to accommodate desired applications. Furthermore, according to further examples, as shown in FIG. 16, a pair of edge modules 300 can redundantly manage a circuit. More specifically, in some applications, edge modules 300 may be deployed in front of large controllers 18 with many circuits, a chain of a plurality of controllers 18, or on single controllers 18 that have plant critical functions. In many cases, it may be desirable to eliminate the edge module 300 as a single point of failure by using two edge modules 300 in a redundant pair mode. In this mode, two identical edge modules 300 can be installed side-by-side, sharing upstream links to the management system 20. Both edge modules 300 can also be independently wired to all host devices 18, 19 downstream. Additionally, the pair are connected with a dedicated point-to-point cable 1600 providing both two-way communications and a means for each module 300 to disable the other. Once powered up, each edge module 300 identifies that it is connected to a partner edge module 300 through their common communication links 22A, 1600. The edge modules 300 can compare their unique IDs and, in one embodiment, the edge module 300 with the numerically highest ID is decided to be the active edge module 300 and the other edge module 300 can adopt a passive monitoring role.

During routine operation, the active edge module 300 can performs its functions normally, and also frequently passes all pertinent operating data to the passive monitoring edge module 300. Concurrently, the passive edge module 300 can listen to all command response traffic between the active edge module 300 and the management system 20. The passive edge module 300 can combine these two information sources and determine if the active edge module 300 is functioning correctly. If it has been determined that the active edge module 300 is non-responsive or malfunctioning, the passive edge module 300 can assume its role and become the active edge module 300.

In some implementations, to change roles, the passive edge module 300 can first disable the malfunctioning edge module 300 by continuously asserting its hardware reset signal through the dedicated link 1600 they share. This can have the effect of indefinitely suspending the edge module 300 in its reset state (e.g., the processor is no longer running and all peripherals and communication channels, including radios, are quiescent). The edge module 300 taking over proceeds to perform the role of the active module 300. It assumes the communications addresses associated with the failed edge module 300, so the supervisory networks will continue to function normally. The new active edge module 300 begins communication with the host device(s) 18, 19 benefiting from all the state information it was tracking during monitoring mode. The transition is seamless from the point of view of the management system 20 and the host device(s) 18, 19 behind it.

Additionally, in some embodiments, LED indicators 1118, 1312 can signal that the first edge module 300 has failed and that the pair are now running in a "failover" mode. The LEDs 1118, 1312 on a module 300 held in reset are all off, which may be an abnormal runtime state. The management system 20 can be alerted that a device failure has occurred but that normal operation continues albeit now in a non-redundant configuration. The passive monitoring edge module 300 can also perform continuous self-tests on itself. If it determines that it has an internal fault while in passive mode, and the active edge module 300 is functioning normally, it suspends operation. If it can still communicate with its active edge module 300, it can ask it to hold it in reset. In this case, the management system 20 can be made aware that the once-failsafe topology has been degraded to a non-redundant one.

As used herein, the phraseology and terminology used is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings, and may also include fluid and electrical connections.

Also as used herein, the use of "including," "comprising," or "having" and variations thereof is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of' (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

Also as used herein, unless otherwise limited or defined, "substantially identical" indicates that features or components are manufactured using the same processes according to the same design and the same specifications. In some cases, substantially identical features can be geometrically congruent.

In some implementations, devices or systems disclosed herein can be utilized, manufactured, or installed using methods embodying aspects of the invention. Correspondingly, any description herein of particular features, capabilities, or intended purposes of a device or system is generally intended to include disclosure of a method of using such devices for the intended purposes, of a method of otherwise implementing such capabilities, of a method of manufacturing relevant components of such a device or system (or the device or system as a whole), and of a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as embodiments of the invention, of the utilized features and implemented capabilities of such device or system.

Features which are described in the context of separate embodiments may also be provided in combination in a single embodiment. Features which are, for brevity, described in the context of a single embodiment, may also be provided separately or in any suitable sub-combination, or combined as new embodiments. The applicant hereby gives notice that new claims may be formulated to one or more features and/or combinations of such features during the prosecution of the present application or of any further application derived therefrom. Feature(s) of the edge module and/or system(s) described may be incorporated into/used in corresponding methods and vice versa.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A communication method for a device within a control system comprising a plurality of devices in communication with a management system, the method comprising:
receiving, by an edge module connected to the device, a first Modbus packet from the management system over a communication line, the first Modbus packet comprising:
a block write command to a first contiguous array of registers of the edge module, collectively designated as a command buffer, wherein the block write command corresponds to a request for the device to perform an action, and
a block read command to a second contiguous array of registers of the edge module, collectively designated as a response buffer;
the edge module interpreting the request based on data within the command buffer, including determining registers of the device associated with the request;
the edge module generating and sending a second Modbus packet comprising a command to the determined registers of the connected device for the device to perform the action; and
the edge module writing data into the response buffer based on the device performing the action, to be read by the management system.

2. The method of claim 1, further comprising the edge module storing operational data from the device in a local memory for data logging.

3. The method of claim 1 or claim 2, wherein the edge module operates in a translate mode where the device retains autonomous operational control while the edge module translates commands from the management system into configuration changes for the device to perform the action; and/or
wherein the edge module operates in an override mode where the edge module translates commands from the management system into direct control commands to resources of the device for the device to perform the action.

4. The method of claim 1, claim 2 or claim 3, wherein the communication line is a wireless communication line.

5. The method of claim 1, or of any preceding claim, further comprising the edge module directly reading sensor inputs and controlling relay outputs associated with the device.

6. The method of claim 1, or of any preceding claim, wherein the edge module is a first edge module; and further comprising the first edge module communicating with a second edge module connected to the device in a redundant configuration with the first edge module, wherein one of the first edge module and the second edge module operates as an active edge module to generate and send the second Modbus packet while the other operates as a passive edge module.

7. The method of claim 6, further comprising the passive edge module monitoring the active edge module by monitoring traffic between the active edge module and the management system; and, optionally,
further comprising the passive edge module becoming a new active edge module and the active edge module becoming an old active edge module when the old active edge module is determined to be malfunctioning during the monitoring; and, optioanally,
further comprising the new active edge module disabling the old active edge module when
the old active edge module is determined to be malfunctioning during the monitoring.

8. An edge module configured to be connected between a management system and a device of an industrial system, the edge module comprising:
an upstream serial port;
a downstream serial port;
a microcontroller comprising a memory storing program instructions and a processor to carry out the program instructions to:
receive a first Modbus packet comprising a multi-register write command to a first contiguous array of Modbus registers, designated as a command buffer, sent across a communication link from the management system to the upstream serial port,
translate the multi-register write command by mapping Modbus registers of the device that are associated with the multi-register write command; and
generate and send a second Modbus packet comprising a command to the mapped Modbus
registers of the device via the downstream serial port.

9. The edge module of claim 8, further comprising a flash memory in communication with the microcontroller, wherein the flash memory is configured to store operational data from the device for data logging operations.

10. The edge module of claim 8 or claim 9, further comprising at least one wireless communication module selected from a field area network module and a Bluetooth/Wi-Fi module, wherein the wireless communication module enables wireless communication with the management system, the device, other edge modules, remote devices, or a combination thereof.

11. The edge module of claim 8, claim 9 or claim 10, further comprising a housing configured for mounting on an external surface of an enclosure, the housing comprising:
a base configured to mount against the external surface; and
a threaded neck extending from the base and configured to pass through an opening in the enclosure.

12. The edge module of claim 11, further comprising a top shell coupled to the base; and a wireless antenna structure coupled to an underside of the top shell; and, optionally,
further comprising indicator LEDs positioned within the housing and configured to emit light to indicate operational status of the edge module or the device; and, optionally,
wherein the indicator LEDs are positioned beneath a lens coupled to the top shell.

13. The edge module of claim 8, or of any of claims 9 to 12, further comprising a housing sized to be mounted on a DIN rail.

14. A method for an edge module to override a host device in an industrial control system, the method comprising:
identifying, by the edge module, a type of the host device by probing the host device via a downstream port of the edge module to determine device information;
mapping, by the edge module, resources of the host device, wherein the mapping includes determining register addresses of each resource;
conditioning, by the edge module, the host device to be passive by disabling automatic control modes; and
overriding, by the edge module, executive control of the host device by directly accessing and manipulating the resources of the host device in response to action commands from a management system.

15. The method of claim 14, wherein one of the resources includes a relay; and overriding includes effecting ON/OFF control of the relay.
